# EUROPEAN PATENT APPLICATION

(11) **EP 4 843 913 A1**
(43) Date of publication of application: **25.11.2026**
(21) Application number: 24918446.6
(22) Date of filing: 26.12.2024
(51) Int. Cl.: B65D 65/40, B32B 7/12, B32B 27/00

(54) **PACKAGING MATERIAL, PACKAGING BAG, AND PACKAGE**

(30) Priority: 18.01.2024 JP 2024005917
(71) Applicant: Toppan Holdings Inc., Tokyo 110-0016 (JP)
(72) Inventor: YOSHIFUJI, Akira, Tokyo 110-0016 (JP); FURUTA, Kaoru, Tokyo 110-0016 (JP); SHIMIZU, Kosuke, Tokyo 110-0016 (JP); YAMADA, Mikinori, Tokyo 110-0016 (JP)
(74) Representative: TBK
(86) International application number: PCT/JP2024/046212
(87) International publication number: WO 2025/154536

(57) **Abstract**

A packaging material 10 includes a first base material 1, an aqueous ink layer 2, an adhesive layer 3, and a second base material 4 in this order. A phase image obtained by observing a cross section of the adhesive layer 3 in a thickness direction thereof in a tapping mode of a scanning probe microscope has a microphase separation structure, which is provided with a sea part and a plurality of island parts scattered in the sea part.

## Description

### [Technical Field]

The present invention relates to a packaging material, a packaging bag, and a packaging member.

### [Background Art]

Conventionally, for packaging bags (such as flexible packaging bags) subjected to heat treatment (e.g., boiling or retort processing) or heat-and-pressure treatment, laminates have been used which are provided with a layered structure made of materials that offer cost-effectiveness while providing properties such as content preservation, heat resistance, pressure resistance, durability against external stress (strength), and printability.

In the technical field of packaging materials, efforts are being made to eliminate volatile organic compounds (VOCs) as part of environmental initiatives. Specifically, for the printing layers used to form text, illustrations, and patterns, efforts are being made to switch from oil-based inks, which contain solvents such as toluene and methyl ethyl ketone that are volatile organic compounds (VOCs), to aqueous inks. The use of aqueous ink offers the advantage of improving the working environment on the production floor and eliminating the problem of residual organic solvents in packaging materials. For example, Patent Document 1 discloses a laminated material for heat-sterilized packaging that uses aqueous ink.

### [Citation List]

### [Patent Literature]

PTL 1: JP2001-79986A

### [Summary of the Invention]

### [Technical Problem]

In cases where the packaging material contains a printed layer formed with aqueous ink, peeling (delamination) and lifting phenomena are likely to occur between the layers comprising the packaging material after the retort processing.

The present disclosure is made in light of the foregoing problems and is intended to provide a packaging material that is resistant to peeling and blistering phenomena between layers after retort processing, as well as packaging bags and packaging members using the packaging material.

### [Solution to Problem]

Certain aspects of the present disclosure provide the following [1] through [12].
[1] One aspect relates to a packaging material provided with a first base material, an aqueous ink layer, an adhesive layer, and a second base material in this order, wherein
   a phase image, which is obtained by observing a cross section of the adhesive layer in a thickness direction thereof by a scanning probe microscope in a tapping mode thereof, has a microphase separation structure provided with a sea part and a plurality of island parts scattered in the sea part.
[2] The packaging material according to aspect [1], wherein the adhesive layer is made of a urethane-based adhesive containing polyisocyanate and polyol.
[3] The packaging material according to aspect [1] or [2], wherein the microphase separation structure has the island parts of which maximum Feret's diameter is 0.1 to 1.0 µm.
[4] The packaging material according to any one of aspects [1] to [3], wherein the island parts are, in number, 0.1 to 100 per µm^{2.}
[5] The packaging material according to any one of aspects [1] to [4], wherein a ratio of n1/n2 is below 1, wherein n1 designate the number of islands which are located relatively closer to the aqueous ink layer than a center of the adhesive layer in the thickness direction is and n2 designate the number of islands which are located relatively closer to the second base material than the center of the adhesive layer in the thickness direction is.
[6] The packaging material according to any one of aspects [1] to [5], wherein the aqueous ink layer is made of aqueous flexographic ink.
[7] The packaging material according to any one of aspects [1] to [6], wherein the adhesive layer is made of adhesive for dry lamination.
[8] The packaging material according to any one of aspects [1] to [7], wherein the first base material contains at least one selected from a group consisting of an oriented polyethylene terephthalate film, an oriented polypropylene film, an oriented nylon film, and an oriented polyethylene film.
[9] The packaging material according to any one of aspects [1] to [8], wherein the first base material contains a vapor barrier layer.
[10] The packaging material according to any one of aspects [1] to [9], wherein an adhesion strength between the first base material and the second base material, which is measured by steps (1) through (5) provided below, is 1.0 N/15mm or more:
   (1) cut two sheets measuring 140 mm in width and 100 mm in length from the packaging material, place the two sheets with their second base material sides facing each other so that their four edges overlap, and heat-seal three of the four edges to form a packaging bag with one open side;
   (2) produce a test pouch by adding water of 50 g to the packaging bag and then heat-sealing one open side of the bag;
   (3) apply retort processing to the test pouch produced in the step (2) at 121 °C for 30 minutes;
   (4) after the retort processing performed in the step (3), cut out a test specimen measuring 15 mm in width and 200 mm in length from one of the two sheets that make up the test pouch; and
   (5) conduct a T-peel test on the test specimen under conditions of 20 °C and 30 %RH, in accordance with JIS K 6854, at a peel rate of 300 mm/min and a width of 15 mm, and then measure the adhesion strength between the first base material and the second base material.
[11] Another aspect relates to a packaging bag provided by bag-forming the packaging material according to any one of aspects [1] to [10].
[12] Another aspect relates to a packaging member provided with the packaging bag according to aspect [11] and contents contained in the packaging bag.

### [Advantageous Effects of Invention]

According to the present disclosure, there can be provided a packaging material that is resistant to peeling and blistering phenomena after retort processing, as well as a packaging bag and a packaging member using said packaging material.

### [Brief Description of Drawings]

[Fig. 1] Fig. 1 is a cross-sectional view pictorially showing an embodiment of a packaging material according to the present disclosure.
[Fig. 2] Fig. 2 is a partially enlarged sectional view showing an area indicated by a reference symbol A in Fig. 1.
[Fig. 3] Fig. 3 is a sectional view pictorially showing another embodiment of a packaging material according to the present disclosure.
[Fig. 4] Fig. 4 is a plan view pictorially showing an embodiment of a packaging bag according to the present disclosure.
[Fig. 5] Fig. 5 shows SPM phase images of cross sections of adhesive layers obtained in examples and comparative examples.

### [Description of the Embodiments]

In this specification, a numerical range indicated by "to" denotes a range that includes the values stated immediately before and after "to" as the minimum and maximum values, respectively. Unless otherwise specified, the units of the numerical values listed before and after "to" are the same. Within the numerical ranges described in this specification, the upper or lower limits of such ranges may be replaced with the values shown in the examples. In addition, the upper and lower limits listed individually can be combined in any way. Furthermore, "A or B" means that it is sufficient for the phrase to include either A or B, or alternatively, "A or B" may also include both of A and B.

The embodiments of the present disclosure will now be described in detail, referring to the accompanying drawings as appropriate. It should be noted that the present disclosure is not limited to the following embodiments. Identical or substantially similar parts in the drawings are designated by the same reference numbers or symbols, and duplicate descriptions are omitted. The scale of the drawings is not limited to that shown in the drawings.

### <Packaging material>

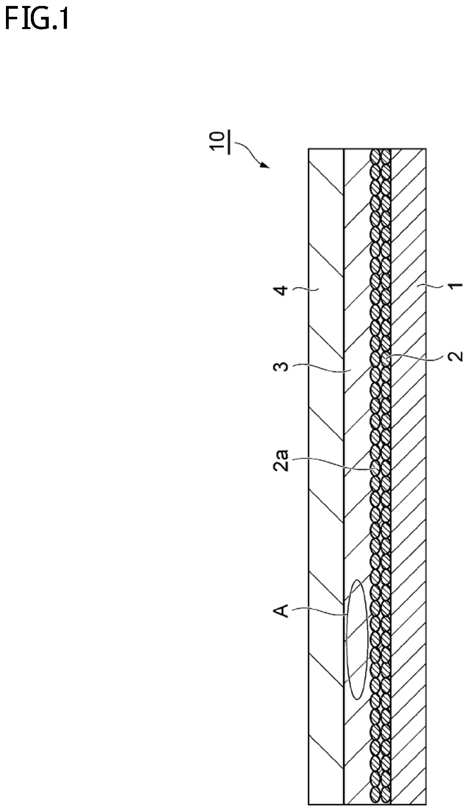

One embodiment of the present disclosure is provided as a packaging material provided with a first base material, an aqueous ink layer, an adhesive layer, and a second base material in that order. The packaging material is, for example, a sheet-shaped laminate (i.e., packaging material 10) shown in Fig. 1. The packaging material 10 shown in Fig. 1 is composed of a first base material 1, an aqueous ink layer 2, an adhesive layer 3, and a second base material 4, with the adhesive layer 3 bonding the aqueous ink layer 2 to the second base material 4. In Fig. 1, a reference number 2a shows pigment contained in the aqueous ink layer. The thickness (total thickness) of the packaging material is not specifically limited, but is, for example, 20 to 300 µm.

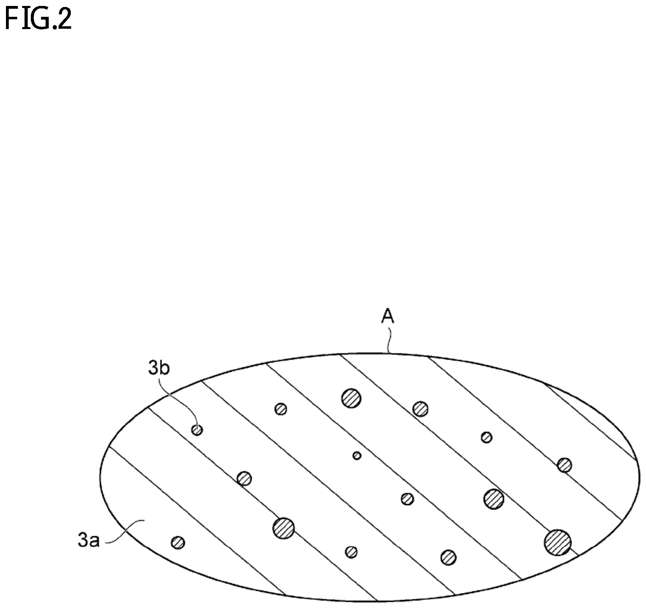

The foregoing packaging material provides a phase image obtained by observing a cross section of the adhesive layer in the thickness direction by using the tapping mode (AC mode) of a scanning probe microscope (hereinafter referred to as "SPM").
Hereinafter this phase image is also referred to as the "SPM phase image of the adhesive-layer cross section."
This phase image is characterized by the observation of a microphase separation structure comprising a sea part (shown by a reference number 3a in Fig. 2) and a plurality of island parts (shown by a reference number 3b in Fig. 2) scattered within the sea part.
In other words, this observation reveals that the phase image has a microphase separation structure comprising a sea part and a plurality of island parts scattered within the sea part. An SPM phase image of the adhesive-layer cross section can be obtained by the following steps (1) through (5).
(1) After corona-treating both sides of the packaging material, the packaging material is cut into 2 × 3 mm strips.
(2) The strip-shaped packaging material obtained is embedded in a light-curable resin, and the resin is cured by irradiation with light, so that a block specimen is produced which comprises the packaging material and the cured resin in which the packaging material is embedded.
(3) The obtained block specimen is secured in an SPM specimen holder insert, and at room temperature (25 °C), the block specimen is trimmed, and the trimmed block specimen is cut along a cross section of the packaging material (i.e., along a cross section which is perpendicular to the layer interface).
(4) While the block specimen which was subject to cross-sectioning remains secured in the SPM specimen holder insert, phase image measurement is performed using an SPM (scanning probe microscope) on the block specimen under the following conditions.

### [Conditions]

In a 25 °C environment, using the SPM AC mode (tapping mode), topography measurements are performed with a field of view of 6 µm × 6 µm and a scanning speed of 2 Hz, ensuring that the layer interface of the cross section is parallel to the Fast Scan scanning direction, so that phase, height, and amplitude images are acquired.

The representative characteristics of the SPM cantilever (measuring probe) are set to have a tip radius of curvature of 7 nm and a spring constant of 26 N/m. The resolution in the measurement is set to 256 × 256 and the Step Point, Drive Amplitude, and Integral Gain are adjusted so that the island parts are clearly visible in the phase image. Specifically, in the phase image, the phase during the measurement should be smaller than a phase prior to contact (Engage) between the sample and the cantilever; in the height image, the trace and retrace signals should match; and in the amplitude image, the trace and retrace signals should be inverted.
(5) The above measurement is performed at three locations, and the resulting phase images are analyzed using the procedure described below.

### [Procedures]

First, a binary image of the adhesive layer is obtained by correlating the magnitude of the phase with the brightness levels of a grayscale image. Next, at both ends of the binary image in the direction parallel to the thickness direction of the adhesive layer, the midpoints in the direction of the adhesive layer thickness are determined, the midpoints at both ends are connected by a straight line, and use the straight line to divide the image. From the adhesive layers divided by the straight line, island-shaped regions with low luminance are extracted on both the side of the adhesive layer adjacent to the aqueous ink layer and the side of the adhesive layer which faces the base material. To distinguish the extracted regions from noise, the minimum area of each part must be composed of, at least, 5 pixels (i.e., 0.0027 µm² or more). Then, for each of the low-luminance island-shaped regions that have been extracted, the minimum Feret's diameter is calculated, and regions with a minimum Feret's diameter of 0.1 µm or greater are classified as "island parts."

The island parts and the sea part are clearly distinguished based on the magnitudes of the phase in the SPM phase image. The measurement described in this specification is performed under conditions where the phase caused during the measurement is smaller than the phase prior to contact (Engage) between the specimen and the cantilever. This condition is ideal for measuring polymeric materials. In SPM phase images acquired under this condition, in general, regions with higher elastic moduli appear with smaller phase values, while regions with lower elastic moduli appear with larger phase values. Thus, the island and sea parts can be described as regions with relatively high (or low) elastic moduli and regions with relatively low (or high) elastic moduli, respectively. In the SPM phase image, in general, where the magnitude of the phase is represented by shades of gray, areas with higher elastic moduli appear darker, while areas with lower elastic moduli appear brighter; thus, the distribution of elastic moduli can be determined based on these shades. It is noted that, depending on the acquisition conditions, the SPM phase image of the adhesive-layer cross section may include features that cannot be definitively identified as noise. Hence, in this specification, under the specified SPM phase image measurement conditions, an "island part" is defined as an island-shaped region if the island-shaped region is present within an island-and-islet structure, where a significant distribution of elastic modulus can be clearly distinguished from noise, and the island-shaped region has a minimum Feret's diameter of 0.1 µm or more. The "Feret's diameter" is defined as the distance between two parallel lines drawn arbitrarily contacting opposing sides of a target image (island part). In this specification, the minimum value of the Feret's diameters is referred to as the "minimum Feret's diameter," and the maximum value of the Feret's diameters is referred to as the "maximum Feret's diameter." The minimum Feret's diameter can be determined by drawing two parallel lines such that the distance mentioned above is minimized. In the same way, the maximum Feret's diameter can be determined by drawing two parallel lines such that the distance mentioned above is maximized.

Packaging materials with the foregoing characteristics are less likely to experience peeling or blistering between layers after retort processing. Therefore, such packaging materials are suitable for retort use, and by using these packaging materials it is possible to obtain packaging bags that are resistant to peeling and blistering between layers, and that are less prone to problems such as deterioration of the aqueous ink layer surface, reduced barrier properties, and an increased risk of bag rupture caused by these issues. In the present disclosure, "for retort use" means that a packaging bag is subjected to the retort processing or the foregoing packaging material is used for manufacturing such packaging bags. In addition, the retort processing is a form of moist heat sterilization prescribed by the Food Sanitation Act, thus referring to sterilization carried out at temperatures of 100 °C or higher. The retort processing may be carried out under pressure (e.g., 0.2 Pa or higher).

The packaging materials with the foregoing characteristics tend to exhibit good laminate strength both before and after retort processing, and are less prone to peeling and blistering between the layers after the retort processing. Before the retort processing, the laminate strength of the foregoing packaging material, which is provided as an adhesion strength provided between the first and second base materials, is measured, for example, according to the procedures described in the following procedures (1a) to (2a). In contrast, after the retort processing, the laminate strength of the foregoing packaging material, which is also provided as an adhesion strength provided between the first and second base materials, is measured, for example, according to the procedures described in the following procedures (1b) to (5b).
(1a): Cut a test specimen measuring 15 mm in width and 200 mm in length from the packaging material.
(2a): Conduct a T-peel test on the test specimen under conditions of 20 °C and 30% RH, in accordance with JIS K 6854, using a peel rate of 300 mm/min and a 15 mm width, and measure the adhesion strength between the first base material and the second base material.
(1b): Cut two sheets measuring 140 mm in width and 100 mm in length from the packaging material, place the sheets face-to-face so that their four edges overlap, and heat-seal three edges of the four edges to create a packaging bag with one open side.
(2b): After putting water of 50 g into the packaging bag, prepare a test pouch by heat-sealing the one open side of the packaging bag.
(3b): Subject the test pouch prepared in the procedure (2b) to retort processing at 121 °C for 30 minutes.
(4b): After the retort processing described in the procedure (3b), cut a test specimen measuring 15 mm in width and 200 mm in length from one of the two sheets that make up the test pouch.
(5b): Conduct a T-peel test on the test specimen under conditions of 20 °C and 30% RH, in accordance with JIS K 6854, using a peel rate of 300 mm/min and a 15 mm width, to measure the adhesion strength between the first base material and the second base material.

It is noted that if the layer constituting the surface of the second base material of the packaging material (i.e., the front surface opposite side to the first base material when viewed from the aqueous ink layer) does not possess heat-sealability, the above measurement shall be performed after a sealant layer has been applied to the surface of the second base material of the packaging material. As an alternative, the heat sealing performed in the procedures (b1) and (b2) may be performed using a 15 mm-wide sealing bar by applying heat and pressure to each of the aforementioned edges at 150 °C and 3 kg/cm² for 0.5 seconds.

The adhesion strength (lamination strength obtained before and after retort processing) measured using the above procedure is, for example, 1.0 N/15 mm or more, and may also be 1.5 N/15 mm or more, 2.5 N/15 mm or more, or 3.5 N/15 mm or more. The upper limit of the adhesion strength measured using the foregoing procedure is, for example, 10 N/15mm.

The following describes the first base material, aqueous ink layer, adhesive layer, and second base material that constitute the foregoing packaging material, as well as the details of the microphase separation structure observed in the SPM phase image of the cross section of the adhesive layer.

### (First base material)

The first base material serves as a substrate for the aqueous ink layer and can also be described as the substrate onto which the aqueous ink is printed. The first base material includes, for example, a resin film. Resins that constitute the resin film include polyester-based resins, polyamide-based resins, polyaramide-based resins, polypropylene-based resins, polyethylene-based resins, polyvinyl chloride-based resins, polystyrene-based resins, polycarbonate-based resins, polyacetal-based resins, and fluororesins. The resin constituting the resin film may be a single type of resin or two or more types of resin.

As for the resin film, it is preferable to use a resin film containing at least one resin selected from the group consisting of polyester-based resins, polyamide-based resins, polyethylene-based resins, and polypropylene-based resins, from a viewpoint that these resins tend to exhibit higher interlayer lamination strength (adhesion strength) before and after the retort processing. Moreover, it is more preferable to use a resin film containing at least one resin selected from the group consisting of polyethylene terephthalate, polypropylene, and polyamide (nylon) polyethylene-based resins.

The resin film may be an unstretched resin film, or it may be a resin film stretched in one or two directions (stretched film). From the perspectives of printability, dimensional stability, and puncture resistance, it is preferable for the resin film to be a resin film stretched in two directions (biaxially stretched resin film). From the perspective that the interlayer lamination strength (adhesion strength) tends to be higher before and after the retort processing, it is preferable to use at least one member selected from the group consisting of oriented polyethylene terephthalate (PET) film, oriented polypropylene (OPP) film, oriented nylon (ONY) film, and oriented polyethylene film. Moreover, it is more preferable to use at least one member selected from the group consisting of biaxially oriented polyethylene terephthalate film, biaxially oriented polypropylene film, biaxially oriented nylon film, uniaxially oriented polyethylene film, and biaxially oriented polyethylene film.

The first base material may comprise two or more types of resin films. In other words, the first base material may be composed of multiple-layered base materials (i.e., a laminate). When the first base material has a multilayer structure, it is preferable that the resin film constitutes the outermost layer of the first base material and is in contact with the aqueous ink layer; it is more preferable that the resin film of the above-mentioned preferred form constitutes the outermost layer of the first base material and is in contact with the aqueous ink layer.

The thickness of the resin film should be sufficient to provide the strength and rigidity required for heat and pressure treatment; for example, it may range from 5 µm to 100 µm or from 8 µm to 50µm. When the thickness of the resin film is 100 µm or less, a soft packaging bag is easier to tear open by hand, and manufacturing costs can be kept low. When the thickness of the resin film is 8 µm or more, it is easier to achieve sufficient strength, rigidity, and other properties.

The first base material may consist solely of a resin film, or it may include other layers in addition to the resin film. For example, the first base material may include a vapor barrier layer applied to the resin film. The vapor barrier layer may be provided on the side of the resin film facing the aqueous ink layer, or on the side of the resin film opposite to the aqueous ink layer. When the first base material includes a vapor barrier layer, the resin film may be in contact with the aqueous ink layer, and the vapor barrier layer may also be in contact with the aqueous ink layer.

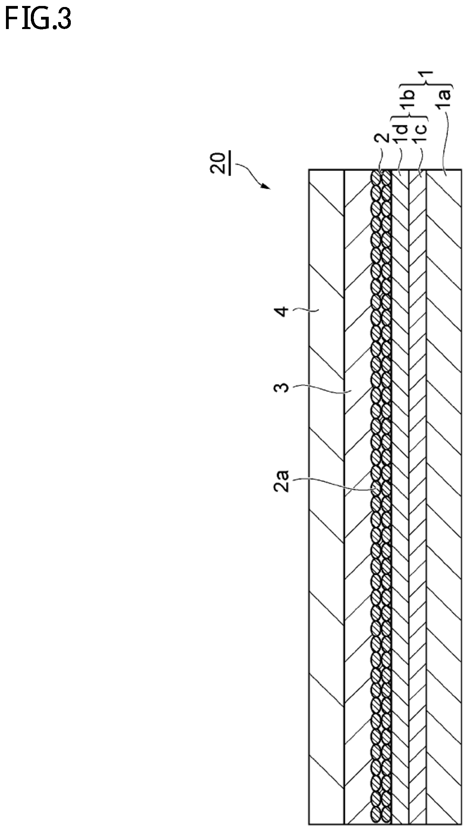

As shown in Fig. 3, the vapor barrier layer may include an inorganic thin film layer and a vapor barrier coating layer. A packaging material 20 shown in Fig. 3 is provided with a first base material 1 consisting of a resin film 1a and a vapor barrier layer 1b, wherein the vapor barrier layer 1b consists of an inorganic thin film layer 1c and a water vapor barrier coating layer 1d. As shown in Fig. 3, the inorganic thin film layer and the vapor barrier coating layer may be provided on the resin film in this order.

The inorganic thin film layer is formed, for example, by depositing (e.g., via vacuum deposition) metals, or oxides, nitrides, or oxynitrides of silicon and the like. Specifically, materials for the inorganic thin film layer may include metals such as aluminum, titanium, copper, indium, and tin, or their oxides (such as alumina), as well as silicon, silicon oxide, and nitrides or oxynitrides of metals or silicon. The inorganic thin film layer may include a thin film layer containing multiple metals. In particular, inorganic thin film layers containing aluminum, titanium, copper, indium, silicon oxides, nitrides, or oxynitrides tend to exhibit excellent transparency and barrier properties. Among these, inorganic thin film layers containing silicon oxides or oxynitrides tend to have higher barrier properties.

Methods for forming inorganic thin film layers include vacuum deposition methods (resistance-heated vacuum deposition, electron beam (EB) heated vacuum deposition, and induction-heated vacuum deposition), sputtering methods (reactive sputtering, dual magnetron sputtering), and PECVD methods (with plasma generation methods including DC (Direct Current), RF (Radio Frequency), MF (Middle Frequency) methods, DC pulse methods, RF pulse methods, or DC+RF superimposed methods, etc.) can be used. The method for forming inorganic thin film layers can be selected appropriately depending on the purpose and application. For example, sputtering may be selected for the sake of film uniformity, while vacuum deposition may be selected for cost reduction.

The thickness of the inorganic thin film layer may, for example, be 5 nm or more or may be 100 nm or less. When the thickness of the inorganic thin film layer is 5 nm or more, good barrier properties are easily obtained. Alternately, when the thickness of the inorganic thin film layer is 100 nm or less, crack formation is suppressed, and the decline in water vapor and oxygen barrier properties is minimal, thereby reducing costs associated with reduced material usage and shorter formation times.

Metal foils, such as aluminum foil, may be used as the inorganic thin film layer. In this configuration, the thickness of the metal foil may be 6 to 9 µm.

The vapor barrier coating layer can be formed by applying a coating solution onto an inorganic thin film layer, before drying and curing the applied coating solution.
This coating solution may contain, for example, polar compounds such as polyvinyl alcohol, polyvinylpyrrolidone, and ethylene-vinyl alcohol; chlorine-containing compounds such as polyvinylidene chloride; compounds containing Si atoms; compounds containing Ti atoms; compounds containing Al atoms; or compounds containing Zr atoms. By laminating the vapor barrier coating layer, it is possible to prevent various types of secondary damage in subsequent processes while also imparting high barrier properties.

The thickness of the vapor barrier coating layer may, for example, be 50 nm or more and 1,000nm or less. More preferably, the thickness may be 200 nm or more and 500 nm or less. When the thickness of the vapor barrier coating layer is 50 nm or more, good vapor barrier properties are easily obtained, and when it is 1,000nm or less, defects in the vapor barrier coating layer caused by insufficient conformality can be suppressed.

The total thickness of the first base material may be, for example, 5 µm to 100 µm or 8 µm to 50 µm.

### (Aqueous ink layer)

The aqueous ink layer is a layer formed from aqueous ink. The aqueous ink layer is formed by printing aqueous ink onto the first base material. The aqueous ink layer may, for example, be an aqueous colored ink layer formed using aqueous colored ink, or it may be an aqueous colorless ink layer formed using aqueous colorless ink (medium).

The aqueous coloring ink may contain, for example, pigments, a binder resin (also known as a "vehicle"), and a solvent (dispersing medium).

The pigments may be either inorganic or organic. Examples of the inorganic pigments include titanium oxide (white pigment), carbon black (black pigment), barium sulfate, and calcium carbonate, and other extender pigments. Examples of the organic pigments include azo pigments, phthalocyanine pigments, dioxazine pigments, quinacridone pigments, isoindolinone pigments, and dye-based lake pigments.

The pigments may be a single type or multiple types. For example, the aqueous ink layer may contain multiple pigments of different colors or multiple pigments with different particle sizes.

When the aqueous ink layer is formed as an aqueous colored ink layer, the pigment content may be 30 to 90 mass percent, when compared with a reference based on the total mass of the aqueous ink layer. When the pigment content is 30 mass percent or higher, superior color development is typically achieved, and there tends to be a marked improvement in the laminate adhesion strength. Furthermore, when the pigment content is 90 mass percent or less, peeling between the aqueous ink layer and the adhesive layer (i.e, delamination) is less likely to occur. From the perspective of achieving an even better balance between excellent color development and suppression of interlayer delamination, the pigment content may be, for example, 35 to 85 mass percent, when compared with a reference based on the total mass of the aqueous ink layer. It is noted that when the aqueous ink layer is a colorless aqueous ink layer referred to by names such as "medium," it may contain white pigment; however, the pigment content is typically 0 mass percent, when compared with a reference based on the total mass of the aqueous ink layer. Such colorless ink is used to adjust the color of the base layer or colored ink.

When the aqueous ink contains pigments, the pigments come into contact with one another within the aqueous ink layer formed by printing the ink, creating gaps between them, and, as these gaps form a continuous mesh-like pattern, through-holes that extend continuously in a mesh-like pattern are formed from the surface of the aqueous ink layer. Therefore, when the aqueous ink contains pigments, the adhesive (particularly polyisocyanate) is more likely to penetrate the aqueous ink layer during the formation of the adhesive layer. As a result, a mesh-like structure derived from the adhesive is formed within the aqueous ink layer, and this mesh-like structure is expected to improve the laminate strength both before and after retort processing.

The binder resin may be, for example, a water-based binder resin. Examples of the water-based binder resins include water-soluble binder resins, emulsion-type binder resins, and colloidal dispersion-type binder resins.

The water-based binder resins include natural resins such as casein resin and shellac resin, and synthetic resins such as rosin-modified maleic resin, styrene-maleic resin, styrene-acrylic resin, α-methylstyrene-acrylic resins, styrene-methacrylic resins, styrene-maleic-acrylic resins, acrylic-acrylic ester resins, acrylic-methacrylic ester resins, acrylic resins, urethane resins, acrylic-urethane resins, styrene resins, and polyester resins, as well as water-soluble polyamide resins and water-based polyurethane resins. From the perspective of achieving a more pronounced improvement in laminate strength (adhesion strength), the water-based binder resin may be provided as a resin that does not have a urethane backbone. With regard to water-soluble binder resins, since resins with no acid value or a low acid value tend to provide better dispersion stability of the ink, adhesion of the aqueous ink layer, and strength of the aqueous ink layer, it is acceptable to use a combination of such resins and resins with a high acid value.

When the aqueous ink layer is formed as an aqueous colored ink layer, the content of the aqueous binder resin may be, for example, 15 to 60 mass percent, 25 to 55 mass percent, or 30 to 50 mass percent, when compared with a reference based on the total mass of the aqueous ink layer. When the aqueous ink layer is provided as a colorless aqueous ink layer, the content of the water-based binder resin may be, for example, 60 to 100 mass percent or 80 to 100 mass percent, when compared with a reference based on the total mass of the aqueous ink layer.

The solvent (dispersing medium) in the aqueous ink dissolves or disperses the binder resin within the ink. The solvent (dispersing medium) in the aqueous ink is, for example, water or a hydrophilic solvent. Examples of hydrophilic solvents include alcohol-based solvents such as methanol, ethanol, propanol, and butanol. Although a portion of the solvent (dispersing medium) of the aqueous ink may remain in the aqueous ink layer, the content of the solvent (dispersing medium) is, for example, 1 mass percent or less, when compared with a reference based on based on the total mass of the aqueous ink layer.

The aqueous inks may contain additives such as dispersants, plasticizers, waxes, lubricants, and defoamers. The aqueous ink layer may contain these components. Examples of the plasticizers include dioctyl terephthalate. Examples of the waxes include polyethylene and polypropylene. Examples of the lubricants include calcium carbonate, barium sulfate, and clay. Examples of the defoamers include silicone-based and hydrocarbon-based types.

Basic compounds such as ammonia, trimethylamine, sodium hydroxide, and potassium hydroxide may be added to aqueous ink to improve the solubility and dispersibility of the resin in the solvent. The aqueous ink layer may contain these components.

As the aqueous ink, there can be used aqueous flexographic ink used in water-based flexographic printing and aqueous inkjet ink used in inkjet printing. It is preferable that the aqueous ink layer be a layer formed from the aqueous flexographic ink. When the aqueous ink layer is formed using the aqueous flexographic ink, the interlayer adhesion strength tends to be higher when being provided before and after the retort processing. Although the exact reason for this tendency is unclear, it is presumed that the aqueous ink used in the flexographic printing tends to contain high concentrations of pigments to enhance color development, and a result of this tendency, gaps among the pigments are likely to form within the aqueous ink layer, thus allowing the adhesive to penetrate more easily into the layer, which is believed to produce the aforementioned effect.

Within the aqueous ink layer, variations in the thickness and ink type distribution may occur depending on the printed design. The maximum thickness of the aqueous ink layer may be 0.4 µm or more, and may be 0.5 µm or more. When the maximum thickness of the aqueous ink layer is 0.4 µm or greater, the color reproduction tends to be improved. For this reason, in other words, it is desirable that the aqueous ink layer contain regions with a thickness of 0.4 µm or more (preferably 0.5 µm or more), depending on the desired image representation. The maximum thickness of the aqueous ink layer is preferably 5.0 µm or less, and may be 3.0 µm or less, or 2.0 µm or less. There is a tendency that the thinner the aqueous ink layer, the higher the interlayer adhesion strength obtained before and after the retort processing. From these perspectives, the maximum thickness of the aqueous ink layer may be, for example, 0.4 to 5.0 µm. The maximum thickness of the aqueous ink layer is the thickness of the aqueous ink layer at the thickest point within the layer. This maximum thickness is determined by cross-sectional observation. The maximum thickness of the aqueous ink layer can be measured using the cross-sectional observation which is performed as follows.

First, three areas measuring 8 mm wide by 8 mm long are randomly selected and cut from the surface of the packaging material containing the aqueous ink layer, thereby collecting three samples. Next, the three collected samples are each embedded in light-curing resin to secure them, and then cross sections are prepared using an ultramicrotome. Next, the resulting cross-sections are examined using an optical microscope or a scanning electron microscope; 30 cross-sectional images are acquired at approximately 0.2 mm intervals in the width direction at magnifications ranging from 1,000 to 5,000 times, and the maximum thickness of the aqueous ink layer is measured in each image. Of the 90 measurement values (maximum thicknesses of the aqueous ink layers) obtained from the measurements described above for the three samples collected, an arithmetic mean of the top 15 values is taken as the maximum thickness of the aqueous ink layer.

Although Figs. 1 and 3 show the aqueous ink layer as a single layer, the aqueous ink layer may have a multilayer structure consisting of two or more layers. For example, the aqueous ink layer may be a two-layer or multilayer structure obtained by first forming a first aqueous ink layer containing pigments with relatively small particle sizes on the surface of the first base material, and then forming a second aqueous ink layer containing pigments with relatively large particle sizes (e.g., white pigments) on the surface of this first aqueous ink layer. When the packaging material includes the second aqueous ink layer containing white pigments, the color development of the first aqueous ink layer tends to improve compared with no white pigments contained in the second aqueous ink layer.

### (Adhesive layer)

The adhesive layer may be formed, for example, from a urethane-based adhesive containing polyisocyanate and polyol. The urethane-based adhesives consist of a base component containing a polyol and a curing agent containing a polyisocyanate, so that the adhesive undergoes curing due to the reaction between the polyol and the polyisocyanate, thus forming an adhesive layer. Therefore, the adhesive layer formed from the urethane-based adhesive contains polyurethane, which is the reaction product of polyol and polyisocyanate. The type of polyisocyanate that constitutes the polyurethane in the adhesive layer can be analyzed at the monomer level using thermal decomposition GC/MS analysis.

### [Polyol]

Examples of the polyol include polyether polyols such as polyoxypropylene polyol and polyoxytetramethylene glycol; hydrocarbon-based polyols such as polycarbonate polyol, polybutadiene polyol, and polyacrylate polyol; and polyester polyols such as polyadipate polyol and polycaprolactone diol. Among these polyols, polyester polyols are the preferred choice due to their water resistance and heat resistance.

A polyester polyol is a compound that contains two or more hydroxyl groups and has a polyester backbone. The polyester backbone may have a polyester-polyurethane backbone. In other words, the polyester polyol may be a polyester urethane polyol. In addition to polyester and polyurethane structures, the polyester polyol may also have a polyether structure. The polyester polyol may be a single type of polyester polyol or a combination of two or more types of polyester polyols.

Commercially available polyester polyols may be used. Examples of such commercially available products for the polyester polyol include Takelac A525 manufactured by Mitsui Chemicals, Inc. (the product name "Takelac" is a registered trademark (the same applies hereafter)) and DIC Dry LX-747 manufactured by DIC Corporation.

### [Polyisocyanate]

Polyisocyanates are compounds containing two or more isocyanate groups. From the perspective of generating highly regular hard segments and enhancing the cohesive strength of the adhesive, it is preferable that the polyisocyanate contain diisocyanates having a single structure (i.e., a structure free of isomers) and a highly regular structure (i.e., a structure with high symmetry and simplicity), and/or isocyanate polymers derived from such diisocyanates. Specifically, examples of the polyisocyanates include hexamethylene diisocyanate, isophorone diisocyanate, and isocyanate polymers derived from such compounds. From a similar perspective, the polyisocyanates may contain a chain-like isocyanate having a symmetrical structure and/or an isocyanate polymer derived from the chain-like isocyanate. Hereinafter, the above-mentioned chain-like isocyanate will be referred to as polyisocyanate (a1), the above-mentioned isocyanate polymer will be referred to as polyisocyanate (a2), and these will be collectively referred to as polyisocyanate (A).

The polyisocyanate (a1) is a linear isocyanate with a symmetrical structure. The polyisocyanate (a1) may be either linear or branched. The polyisocyanate (a1) may be, for example, an aliphatic isocyanate. The number of carbon atoms in the aliphatic isocyanate may be, for example, 4 to 6. Examples of the aliphatic isocyanates include tetramethylene diisocyanate, hexamethylene diisocyanate, and pentamethylene diisocyanate. The polyisocyanate (a1) may be used alone or in combination with two or more types thereof.

The polyisocyanate (a2) is an isocyanate polymer derived from a linear isocyanate with a symmetrical structure. The polyisocyanate (a2) may be a polymer (multimer) obtained by reacting (polymerizing) chain-like isocyanates with one another, or may be a polymer obtained by further reacting (polymerizing) such polymers with one another. The polyisocyanate (a2) may be a copolymer obtained by reacting (polymerizing) a chain-like isocyanate with a monomer capable of reacting with the isocyanate, in which the monitor is, for example, a compound containing active hydrogen, such as a polyol.

Examples of the polyisocyanate (a2) include: isocyanurate of the polyisocyanate (a1); uretdione of the polyisocyanate (a1); biuret of the polyisocyanate (a1); allophanate of the polyisocyanate (a1); adducts of the polyisocyanate (a1) (e.g., polyhydric alcohol adducts such as trimethylolpropane adducts); compounds having urethane bonds that are reaction products of the polyisocyanate (a1) and polyhydric alcohols. The polyisocyanate (a2) may be used alone or in combination with two or more types thereof. The polyisocyanate (a2) may be an isocyanate polymer derived from multiple types of the polyisocyanate (a1). The polyisocyanate (a2) may be an isocyanate polymer derived from the polyisocyanate (a1) through multiple reactions (polymerization).

From the perspective that interlaminar adhesion strength tends to be higher before and after retort processing, it is preferable that the polyisocyanate (A) contain hexamethylene diisocyanate (HDI) or an isocyanate polymer derived from the hexamethylene diisocyanate; it is more preferable that the polyisocyanate (A) contains an isocyanate polymer derived from the hexamethylene diisocyanate; and it is further preferable that the polyisocyanate (A) contains an isocyanurate of hexamethylene diisocyanate (HDI isocyanurate) or a biuret of hexamethylene diisocyanate (HDI biuret). From the perspective of water resistance, it is particularly preferable for the polyisocyanate (A) to contain the isocyanurate form of hexamethylene diisocyanate.

From the perspective that the interlaminar adhesion strength tends to be higher before and after retort processing, the content of the polyisocyanate (a1), when based on the total solid content of the adhesive, may be 3 mass percent or more, may be 15 mass percent or more, or may be 25 mass percent or more. From a cost reduction perspective, the content of the polyisocyanate (a1) may be 35 mass percent or less, when compared with a reference based on the total solid content of the adhesive, and may even be 15 mass percent or less. From these perspectives, the content of the polyisocyanate (a1) may be 3 to 35 mass percent, when compared with a reference based on the total solid content of the adhesive, and may also be 3 to 15 mass percent. In this specification, the term "total solid content of the adhesive" refers to the amount obtained by subtracting the amount of solvent from the total amount of the adhesive when the adhesive contains a solvent, and to the total amount of the adhesive when the adhesive does not contain a solvent.

From the perspective that the interlayer adhesion strength tends to be higher before and after retort processing, the content of the polyisocyanate (a2) may be 3 mass percent or more, when compared with a reference based on the total solid content of the adhesive, may be 15 mass percent or more, or may be 25 mass percent or more. From a cost reduction perspective, the content of the polyisocyanate (a2) may be 35 mass percent or less, when compared with a reference based on the total solid content of the adhesive, and may even be 15 mass percent or less. From these perspectives, the content of the polyisocyanate (a2) may be 3 to 35 mass percent, when compared with a reference based on the total solid content of the adhesive, or may also be 3 to 15 mass percent.

From the perspective that interlayer lamination strength (adhesion strength) tends to be higher before and after the retort processing, and from the perspective that it tends to easily form an island-like microphase separation structure, the content of the polyisocyanate (A), when compared with a reference based on the total solid content of the adhesive, may be 3 to 70 mass percent, 3 to 50 mass percent, 3 to 35 mass percent, 3 to 15 mass percent, 15 to 70 mass percent, 25 to 70 mass percent, or 50 to 70 mass percent.

Even when the polyisocyanate (A) is used in combination with the polyisocyanate (B) described below, the following factors are taken into account: the tendency for the interlaminar adhesion strength to be higher before and after the retort processing, and the tendency to easily form an island-like microphase separation structure. In this case as well, the content of the polyisocyanate (A), when compared with a reference based on the total solid content of the adhesive, may be 3 mass percent or more, 15 mass percent or more, 25 mass percent or more, or 50 mass percent or more. In the above case, from a cost reduction perspective, the content of the polyisocyanate (A) may be 70 mass percent or less, when compared with a reference based on the total solid content of the adhesive, and may be 50 mass percent less, 35 mass percent or less, or 15 mass percent or less. From these perspectives, the content of the polyisocyanate (A), when compared with a reference based on the total solid content of the adhesive, may be 3 to 70 mass percent, 3 to 50 mass percent, 3 to 35 mass percent, 3 to 15 mass percent, 15 to 70 mass percent, 25 to 70 mass percent, or 50 to 70 mass percent.

When the polyisocyanate (A) is used alone as the polyisocyanate, the content of the polyisocyanate (A) is determined by taking into account the fact that it tends to result in higher interlaminar adhesion strength before and after the retort processing, as well as the fact that it tends to easily form an island-like microphase separation structure. In other words, the content of the polyisocyanate (A) may be 8 mass percent or more, 11 mass percent or more, 22 mass percent or more, or 50 mass percent or more, when compared with a reference based on the total solid content of the adhesive. In the above case, from a cost reduction perspective, the content of the polyisocyanate (A) may be 70 mass percent or less, based on the total solid content of the adhesive, 50 mass percent or less, or 41 mass percent or less, when compared with a reference based on the total solid content of the adhesive. From these perspectives, the content of the polyisocyanate (A), when compared with a reference based on the total solid content of the adhesive, may be 8 to 70 mass percent, 8 to 50 mass percent, 8 to 41 mass percent, 11 to 70 mass percent, 22 to 70 mass percent, or 50 to 70 mass percent.

The polyisocyanate may contain a polyisocyanate (hereinafter referred to as "polyisocyanate (B)") other than the polyisocyanate (A) in addition to the polyisocyanate (A) or in place of the polyisocyanate (A).

Examples of the polyisocyanates (B) include aromatic polyisocyanates such as phenylene diisocyanate, toluene diisocyanate, diphenylmethane diisocyanate, and xylylene diisocyanates (meta-xylylene diisocyanate and para-xylylene diisocyanate); alicyclic polyisocyanates such as isophorone diisocyanate, hydrogenated diphenylmethane diisocyanate, and hydrogenated xylylene diisocyanate; and isocyanate polymers derived from these polyisocyanates, among others. Examples of the isocyanate polymers include isocyanurate derivatives of the aforementioned aromatic or alicyclic polyisocyanates; biuret derivatives of the aforementioned aromatic or alicyclic polyisocyanates; and polyhydric alcohol adducts (e.g., trimethylolpropane adducts) of the aforementioned aromatic or alicyclic polyisocyanates.

As the polyisocyanate (B), a commercially available one may be used. Examples of such commercially available products include Takenate D-140N, Takenate D-110N, and Takenate A52 (manufactured by Mitsui Chemicals, Inc.; "Takenate" is a registered trademark (the same applies hereafter)) and KX-75 (manufactured by DIC Corporation).

From the perspective of crosslinking density with the polyol, film cohesion, and the ability to facilitate the formation of an island-like microphase separation structure, the content of the polyisocyanate (B) may be 8 to 62 mass percent, or, may also be 8 to 14 mass percent or 18 to 62 mass percent, when compared with a reference based on the total solid content of the adhesive.

When the polyisocyanate (B) is used in combination with the polyisocyanate (A), from the perspective of crosslinking density with the polyol, film cohesion, and the ability to facilitate the formation of an island-shape microphase separation structure, the content of the polyisocyanate (B) may be 8 mass percent or more, and may even be 14 mass percent or more, when compared with a reference based on the total solid content of the adhesive. In the foregoing case, since the interlayer lamination strength (adhesion strength) tends to be higher before and after the retort processing, the content of the polyisocyanate (B) may be 14 mass percent or less, when compared with a reference based on the total solid content of the adhesive. When considering those perspectives, the content of the polyisocyanate (B) may be 8 to 14 mass percent, when compared with a reference based on the total solid content of the adhesive.

When it is assumed that the polyisocyanate (B) is used alone, with consideration for the perspective that the interlaminar adhesion strength tends to be higher before and after the retort processing and the perspective that the island-like microphase separation structure tends to be formed easily, the content of the polyisocyanate (B) may be 18 mass percent or more, or may even be 34 mass percent or more, when compared with a reference based on the total solid content of the adhesive. In the foregoing case, from a cost reduction perspective, the content of the polyisocyanate (B) may be 62 mass percent or less, when compared with a reference based on the total solid content of the adhesive. From these perspectives, the content of the polyisocyanate (B) may be 18 to 62 mass percent or 34 to 62 mass percent, when compared with a reference based on the total solid content of the adhesive.

From the perspective that the cohesive strength of the adhesive layer tends to increase before and after the retort processing, the NCO value (unit: mol/g) of the polyisocyanate may be 1.0 × 10⁻³ or higher, or alternatively may be 2.0 × 10⁻³ or higher, or 5.0 × 10⁻³ or higher. As the NCO value of the polyisocyanate increases, the segregation of urethane bonds becomes more pronounced, thus making it easier for highly cohesive islands to form. The NCO value (unit: mol/g) of the polyisocyanate may, for example, range from 1.0 × 10⁻³ to 3.0 × 10^{-1.} This NCO value is measured by the potentiometric titration method specified in JIS K 6806.

From the perspective of the crosslinking density of the adhesive layer and from the perspective that greater segregation of urethane bonds leads to the formation of islands with high cohesive strength, the ratio (NCO/OH) of the number of moles of the total isocyanate groups (NCO groups) in compounds containing isocyanate groups (such as polyisocyanates) to the number of moles of total active hydrogen groups in the active hydrogen-containing compounds (such as polyols) present in the adhesive may be 2.0 or more, 11.5 or less, 8.1 or less, or within the range of 2.0 to 11.5.

In addition to compounds containing active hydrogen and polyisocyanates, the adhesive may further contain additives such as solvents, dispersants, defoamers, leveling agents, stabilizers, fillers, lubricants, slip agents, and waxes. These components may be included in the adhesive layer.

The adhesive may be an adhesive for dry lamination, or it may be an adhesive for solvent-free lamination.

Although some of the solvents (such as diluents) contained in the adhesive may remain in the adhesive layer, the solvent content is 1 mass percent or less, for example, when measured as a reference based on the total mass of the adhesive layer. Examples of the solvents include ethyl acetate and methyl ethyl ketone.

The thickness of the adhesive layer is, for example, 0.5 to 5.0 µm. It is noted that the thickness of the adhesive layer refers to the shortest distance from the surface of the aqueous ink layer to the surface on the opposite side of the aqueous ink layer, and does not include the thickness of the area within the aqueous ink layer where the adhesive has penetrated. The thickness of the adhesive layer can be measured using the cross-sectional images of the top 15 points used to calculate the maximum thickness of the aqueous ink layer described above. Specifically, the thickness of the adhesive layer can be determined by measuring the thickness of the adhesive layer in the cross-sectional images of the 15 points mentioned above and calculating the arithmetic mean of these measurements.

From the perspective of enhancing the interlayer adhesion strength, the ratio of the thickness of the aqueous ink layer (maximum thickness) to the thickness of the adhesive layer, i.e., thickness of the aqueous ink layer / thickness of the adhesive layer, may be 0.1 or greater, may also be 0.3 or greater, may also be 0.5 or greater, or may also be 1.0 or greater. From the perspectives of reduction material costs and obtaining suitability for the coating process, the ratio of the thickness of the aqueous ink layer (maximum thickness) to the thickness of the adhesive layer, i.e., thickness of the aqueous ink layer / thickness of the adhesive layer, may be 2.5 or less, 2.0 or less, 1.5 or less, 1.0 or less, or 0.5 or less. From these perspectives, the ratio of the thickness of the aqueous ink layer (maximum thickness) to the thickness of the adhesive layer, i.e., thickness of the aqueous ink layer / thickness of the adhesive layer, may be between 0.1 and 2.5.

### [Microphase separation structure]

The microphase separation structure observed in the SPM phase image of the adhesive-layer cross section comprises a sea part and a plurality of island parts scattered within the sea part.

The island parts are, for example, aggregates of components within the adhesive layer, and exhibit a higher elastic modulus than the sea part in terms of phase measurements performed using the tapping mode (AC mode) of the SPM.

This island-like microphase separation structure can be formed, for example, by adding the foregoing polyisocyanate in an amount greater than a certain threshold. When using the urethane-based adhesive described above, both the sea part and the island parts may contain polyurethane, meanwhile, however, the island-like parts (e.g., regions of lower brightness in the phase image) tend to contain a higher proportion of urethane bonds. Hence, when the polyol component of a urethane-based adhesive is a polyester polyol as an example, the ratio of urethane bonds to ester bonds (urethane bonds/ester bonds), which can be confirmed by IR analysis, tends to be higher in the island parts than in the sea part. As the amount of the added polyisocyanate increases, the size of the island parts tends to increase, and the number of island parts also tends to increase.

This microphase separation structure preferably comprises islands having a maximum Feret's diameter of 0.1 to 1.0 µm, and specifically, it is more preferable that the maximum Feret's diameter of all the island parts is 1.0 µm or less (i.e., the maximum value of the maximum Feret's diameter of the island parts is 1.0 µm or less). When there are island parts where the maximum Feret's diameter is within the above range, the laminate strength (adhesion strength) tends to be higher before and after the retort processing. From a similar perspective to the foregoing, the microphase separation structure may have island parts with a maximum Feret's diameter of 0.8 µm or less, 0.5 µm or less, or 0.35 µm or less, or all of the island parts may have a maximum Feret's diameter of 0.8 µm or less, 0.5 µm or less, or 0.35 µm or less. From the perspective of reducing variations in the lamination strength (adhesion strength) within the plane of the aqueous ink layer in cases where thickness variations exist within that plane due to the patterns, it is preferable that the maximum Feret's diameter of the island parts be 0.11 µm or greater. Specifically, it is preferable for the microphase separation structure to have island parts with a maximum Feret's diameter of 0.11 µm or more (e.g., 0.11 to 1.0 µm), and it is even more preferable for all island parts to have a maximum Feret diameter of 0.11 µm or more (e.g., 0.11 to 1.0 µm). Alternatively, the maximum Feret's diameter of the island parts may be 0.15 µm, 0.2 µm or more, or 0.3 µm or more. The maximum value of the Maximum Feret's diameter for the island parts is determined by acquiring cross-sectional phase images at three arbitrary locations (within a field of view of 6 µm × 6 µm) and measuring the Maximum Feret's diameter of all of the island parts contained within these locations using particle analysis performed by image analysis software.

The number of island parts may range, for example, from 0.1 to 100 per µm^{2.} When the number of island parts is within this range, the laminate strength (i.e., adhesion strength) tends to be higher both before and after retort processing. From the similar perspective to the foregoing, the number of island parts may be 0.5 or more per µm², or 0.7 or more per µm²; or may also be 40 or less per µm², 10 or less per µm², or 6 or less per µm^{2.} In addition, regarding the number of islands,, as an example, by measuring the number of island parts n1 (units: per µm²) located on the aqueous ink layer side relative to the center in the adhesive-layer thickness direction, and the number of island parts n2 (units: per µm²) located on the second base material side relative to the center in the adhesive-layer thickness direction, and calculating their averages, the number of island parts can be obtained. For example, the number of island parts n1 is obtained by measuring the number of island parts per 1 µm² at three arbitrary locations (within a field of view of 6 µm × 6 µm) on the aqueous ink layer side relative to the center in the thickness direction of the adhesive layer, and then calculating the average of those values. Similarly, the number of island parts n2 is obtained, by way of example, by measuring the number of island parts per 1 µm² at three arbitrary locations (within a field of view of 6 µm × 6 µm) on the side of the second base material relative to the center in the thickness direction of the adhesive layer, and then calculating the average of those values.

The size and number of the island parts described above tend to vary depending not only on the amount of the added polyisocyanate, but also on the type of the added polyisocyanate, the type of the aqueous ink layer, the thickness of the aqueous ink layer, the thickness of the adhesive layer, and the ratio of the aqueous ink layer thickness to the adhesive layer thickness, among other factors. For example, when using a polyhydric alcohol adduct of polyisocyanate (a1) (e.g., a trimethylolpropane adduct) as the polyisocyanate, the size of the island parts tends to increase. Furthermore, in cases such as when an aqueous ink layer that is easily penetrated by adhesive is used, when the thickness of the aqueous ink layer is increased, or when the thickness of the adhesive layer is reduced, the size of the island parts tends to decrease, and the number of island parts also tends to decrease.

The ratio n1/n2 between the number n1 of island parts located closer to the aqueous ink layer than to the center of the adhesive layer in the thickness direction, to the number n2 of island parts located closer to the second base material than to the center of the adhesive layer in the thickness direction, may be less than 1, may be 0.95 or less, or may be 0.80 or less. When the ratio n1/n2 is less than 1, the laminate strength (i.e., adhesion strength) tends to be higher before and after the retort processing. Although the reason for this effect is not clear, it is believed that as the adhesive penetrates through the aqueous ink layer, a gradient in the number of island parts is caused in the thickness direction of the adhesive layer, causing the aforementioned ratio n1/n2 to fall below 1. In addition to this presumption, it is presumed that the adhesive that has penetrated through the aqueous ink layer forms a mesh-like structure, thereby improving the laminate strength before and after the retort processing. From the perspective of maintaining uniformity in the thickness direction of the laminate, the foregoing ratio n1/n2 may be 0.1 or greater, or may also be 0.4 or greater, or 0.5 or greater. From these perspectives, the foregoing ratio n1/n2 may, for example, be 0.1 or greater but less than 1.

### (Second base material)

The second base material may include a sealant layer. The sealant layer is composed, for example, of a resin that can be melted by heat and fused together. Resins that constitute the sealant layer include, for example, low-density polyethylene, medium-density polyethylene, high-density polyethylene, linear low-density polyethylene, polypropylene, ethylene-vinyl acetate copolymer, ionomer resin, ethylene-ethyl acrylate copolymer, ethylene-acrylic acid copolymer, ethylene-methacrylic acid copolymer, ethylene-propylene copolymer, methylpentene polymer, polyolefin resins such as polyethylene and polypropylene; and resins such as acid-modified polyolefin resins which are modified with unsaturated carboxylic acids such as acrylic acid, methacrylic acid, maleic anhydride, or fumaric acid. The resin constituting the sealant layer may consist of one type or two or more types of resin materials.

The thickness of the sealant layer may be, for example, 5 to 300 µm, or 10 to 100 µm.

The second base material may consist solely of the sealant layer itself or may include other layers in addition to the sealant layer. For example, the second base material may include a vapor barrier layer in addition to the sealant layer. The details of the vapor barrier layer are the same as those of the vapor barrier layer that can be included in the first base material described above.

The total thickness of the second base material may, for example, be 5 to 300 µm, or may also be 10 to 200 µm or 10 to 100 µm.

The packaging material may consist of the first base material, the aqueous ink layer, the adhesive layer, and the second base material, or, alternatively, the packaging material may include base materials or layers other than those ones. For example, the packaging material may further include, on at least one of the surface which is opposite to the aqueous ink layer of the first base material and the surface which is opposite to the aqueous ink layer of the second base material, another base material which is different from the first base material and the second base material. Such other base materials may be composed of the base material described as the first base material, or may be composed of the base material described as the second base material. Alternatively, such other base materials may be laminated via an adhesive layer. The details of such an adhesive layer are the same as those described above.

The outermost layer of the packaging material may be provided as a sealant layer. The specifications of the sealant layer are the same as those of the sealant layer in which the second base material may be contained. The second base material may include a sealant layer that forms the outermost layer of the packaging material, or a base material other than the second base material may include a sealant layer that forms the outermost layer. For example, in cases where the packaging material is provided with another base material (e.g., a third base material) on the side which is opposite to the aqueous ink layer of the second base material, the other substrate may include a sealant layer. In this configuration, the second base material need not include a sealant layer. The second base material that does not contain a sealant layer may be formed as a base material which has been exemplified as the first base material.

### <Method for manufacturing packaging material>

Another embodiment of the present disclosure is concerned with a manufacturing method of the packaging material, which includes: a step (A) of printing aqueous ink onto the surface of a first base material to form an aqueous ink layer; a step (B) of coating an adhesive onto the surface of the aqueous ink layer which is opposite to the first base material to form an adhesive layer; and a step (C) of laminating a second base material onto the surface of the adhesive layer which is opposite to the aqueous ink layer. In the following description, details which are common to the packaging material already described in the foregoing embodiment are omitted from being re-described

Aqueous ink contains, for example, pigments, a binder resin, and a solvent (dispersing medium). As the aqueous ink, the aqueous ink layer described above may be used. The solvent content in the aqueous ink is, for example, 40 to 80 mass percent, when compared with a reference which is based on the total mass of the aqueous ink.

The aqueous ink can be printed using known methods such as gravure printing, flexographic printing, and inkjet printing. In the step (A), the aqueous ink layer may be formed by solid printing, or the aqueous ink layer may be formed by pattern printing of text, figures, symbols, designs, or other desired patterns. After forming a first aqueous ink layer by the solid printing, pattern printing of a desired pattern may be performed on the first aqueous ink layer to form a second aqueous ink layer. As explained, it is preferable to use aqueous flexographic ink as the aqueous ink, and it is preferable to print the aqueous ink using the flexographic printing method with the aqueous flexographic ink.

The adhesive contains, for example, compounds containing active hydrogen and polyisocyanates. The adhesive used to form the foregoing adhesive layer may be employed as the adhesive. The components of the adhesive (e.g., compounds containing active hydrogen and polyisocyanates) may be mixed immediately before application. Conventional known adhesive application methods, such as the cast method, dipping method, roll coating method, gravure coating method, screen printing method, reverse coating method, spray coating method, kit coating method, die coating method, metering bar coating method, chamber doctor blade coating method, and curtain coating method, may be employed.

When the adhesive contains a solvent (for example, when the adhesive is an "adhesive for dry lamination"), a drying process may be performed after application to remove the solvent and dry the coating film. The coating may be dried at temperatures ranging from 25 to 120 °C, for example.

The layering of the second base material (e.g., the formation of a sealant layer) may be performed by applying a coating solution containing a resin capable of melting and fusing together under the drying heat explained above, using conventional methods such as dipping, roll coating, screen printing, or spraying. In addition, the sealant layer can be formed by applying a film or sheet composed of the foregoing resin.

In the manufacturing method of this embodiment, the size and number of island parts observed in the cross-section of the adhesive layer in the thickness direction can be adjusted, for example, by modifying the type and amount of polyisocyanate used in the adhesive, as well as the type and thickness of the aqueous ink layer. In other words, in the manufacturing method of this embodiment, the packaging material explained in the foregoing embodiment can be obtained by adjusting, for example, the type and amount of polyisocyanate used in the adhesive, as well as the type and thickness of the aqueous ink layer.

The manufacturing method of this embodiment may further include a step (B') of coating a second adhesive onto the surface of the second base material which is opposite to the aqueous ink layer to form a second adhesive layer. Moreover, the manufacturing method may further include a step (C') of laminating a third base material onto the surface of the second adhesive layer which is opposite to the second base material. The manufacturing method of this embodiment may further include a step (B") of coating a third adhesive onto the surface of the first base material which is opposite to the aqueous ink layer, thereby forming a third adhesive layer, either in place of or in addition to the foregoing step (B'). Alternatively, instead of or in addition to the foregoing step (C'), the manufacturing method may further include a step (C") of laminating a fourth base material onto the surface of the third adhesive layer which is opposite to the first base material. The steps (B') and (B") may be performed in the same manner as the foregoing step (B). Similarly, the steps (C') and (C") may be performed in the same manner as the foregoing step (C). Furthermore, the third base material and the fourth base material may be composed of the same material as the first base material described above, and the second adhesive and the third adhesive may also be composed of the same material as the adhesive described above.

### <Packaging Bag>

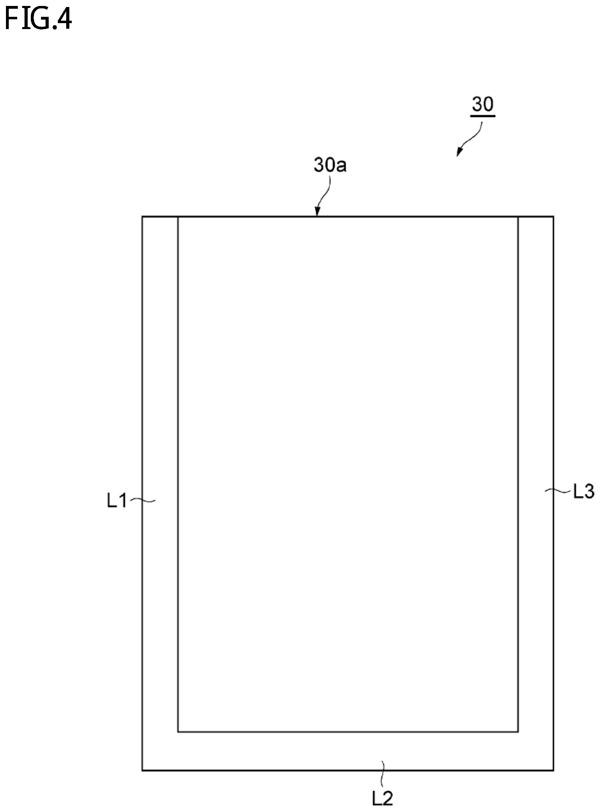

Another embodiment of the present disclosure is a packaging bag formed by converting the packaging material according to the foregoing embodiment into a bag. This packaging bag is formed into a bag-like shape, for example, as shown in Fig. 4, by heat-sealing three edges L1, L2, and L3 of two superimposed rectangular sheets made of the packaging material. After placing the contents (such as food or pharmaceuticals) through the unsealed opening 30a, the packaging bag 30 can be sealed by heat-sealing the opening 30a. It is noted that the form of the packaging bag is not limited to this example. Other examples of packaging bags include pillow packaging, three-side seal packaging, and gusseted packaging.

### <Packaging member>

Another embodiment of the present disclosure is provided with a packaging bag and contents housed within the packaging bag, wherein a laminate constituting the packaging bag includes, from the outer side, a first base material, an aqueous ink layer, an adhesive layer, and a second base material. The packaging member has a microphase separation structure with both a sea part and a plurality of island parts scattered within the sea portion, as observed in a phase image obtained by observing a cross-section of the adhesive layer in the thickness direction thereof, using the tapping mode of a scanning probe microscope.

The packaging bag made from the foregoing packaging member may be a packaging bag provided from the foregoing embodiment (i.e., the packaging material according to the foregoing embodiment can be formed into a packaging member). In other words, another embodiment of the present disclosure may be a packaging member comprising the packaging bag according to the embodiment and the contents contained therein. The packaging bag according to the above embodiment may be retort-processed. In other words, the packaging member may be a retort-processed packaging member. Although the reason is unclear, when the packaging material of the above embodiment undergoes retort processing, the size and number of island parts observed in the SPM phase image of the adhesive-layer cross section may change.

When the packaging member is a retort-processed packaging member, the maximum Feret's diameter of the island parts should preferably be, for example, 0.1 to 1.0 µm. Specifically, it is preferable for the microphase separation structure to have island parts with a maximum Feret's diameter of 0.1 to 1.0 µm, and it is more preferable for the maximum Feret's diameter of all island parts to be 1.0 µm or less (i.e., the maximum value of the maximum Feret's diameter of the island parts is 1.0 µm or less). When there are island parts with a maximum Feret's diameter within the above range, from a similar perspective, the microphase separation structure may include island parts with a maximum Feret's diameter of 0.8 µm or less, 0.5 µm or less, or 0.35 µm or less, or all island parts may have a maximum Feret's diameter of 0.8 µm or less, 0.5 µm or less, or 0.35 µm or less. When the aqueous ink layer has variations in the thickness, which are due to patterns formed thereon, it is preferable that the maximum Feret's diameter of the island parts be 0.11 µm or greater, from the perspective of reducing variations in lamination strength (adhesion strength) of the plane of the aqueous ink layer. Specifically, it is preferable for the microphase separation structure to have island parts with a maximum Feret's diameter of 0.11 µm or more (e.g., 0.11 to 1.0 µm), and it is even more preferable for all island parts to have a maximum Feret's diameter of 0.11 µm or more (e.g., 0.11 to 1.0 µm). The maximum Feret's diameter of the island parts may be 0.15 µm, 0.2 µm or more, or 0.3 µm or more. It is noted that the method for measuring the maximum value of the Maximum Feret's diameter of the island parts is the same as the method described above for measuring the Maximum Feret's diameter of the island parts in explaining the packaging material.

When the packaging member is a retort-processed packaging member, the number of island parts may be, for example, 0.1 to 100 per µm^{2.} When the number of island parts is within this range, the laminate strength (adhesion strength) tends to be higher both before and after retort processing. From a similar perspective to the foregoing, the number of island parts may be 0.5 or more per µm², or 0.7 or more per µm², and may also be 40 or fewer per µm², 10 or fewer per µm², or 6 or fewer per µm^{2.} It is noted that the method for measuring the number of island parts is the same as that described above for the foregoing packaging material.

When the packaging member is a retort-processed packaging member, the ratio n1/n2 between the number n1 of island parts located closer to the aqueous ink layer relative to the center of the adhesive-layer thickness direction and the number n2 of island parts located closer to the second base material relative to the center of the adhesive-layer thickness direction may be less than 1, and may be 0.95 or less, or 0.80 or less. When the above ratio n1/n2 is less than 1, the lamination strength (adhesion strength) tends to be higher both before and after retort processing. From the perspective of maintaining uniformity in the thickness direction of the laminate, the above ratio n1/n2 may be 0.1 or greater, and may be 0.4 or greater, or 0.5 or greater. From these perspectives, the above ratio n1/n2 may, for example, be 0.1 or greater but less than 1.

When the packaging member is a retort-processed packaging member, the adhesion strength between the first base material and the second base material, measured according to the procedures (1') to (2') which are below, may be 1.0 N/15 mm or more, and may also be 1.5 N/15 mm or more, 2.5 N/15 mm or more, or 3.5 N/15 mm or more. The upper limit of the adhesion strength measured by the following procedures is, for example, 10 N/15mm.
(1'): A test specimen measuring 15 mm in width and 200 mm in length is cut from the laminate.
(2'): A T-peel test is conducted on the test specimen under conditions of 20 °C and 30% relative humidity, in accordance with JIS K 6854, using a peel rate of 300 mm/min and a 15 mm width, whereby the adhesion strength between the first base material and the second base material is measured.

The contents of the packaging member are not specifically limited, but may include, for example, food or pharmaceuticals.

The packaging member described above can be obtained, for example, by placing the contents (such as food or pharmaceuticals) into the packaging member via the opening of the packaging bag described in the above embodiment, closing the opening to seal the interior of the packaging member, and, where appropriate, subjecting the closed packaging member to retort processing.

### [Examples]

The present disclosure will now be described below with reference to examples and comparative examples. It should be noted that the present disclosure is not limited to the following examples.

### <Example 1-1>

### (Manufacturing packaging material)

### [Step (A)]

As the first base material, a 12-µm-thick biaxially oriented polyethylene terephthalate film (manufactured by Toyobo Co., Ltd., product name: Toyobo Ester Film (Type: 5102), "Toyobo Ester" is a registered trademark; denoted as "PET" in the table) was prepared, and printed red aqueous flexographic ink (aquariona TPN3 Magenta manufactured by Toyo Ink Co., Ltd.) onto the surface of the first base material using flexographic printing such that an aqueous ink layer 0.7 µm thick (denoted as "ink" in the table) was formed. Hence, this step resulted in a laminate consisting of a first base material and an aqueous ink layer. It is noted that the thickness of the aqueous ink layer in this example refers to the "maximum thickness" measured using the method described above.

### [Step (B) and Step (C)]

Takelac A626 manufactured by Mitsui Chemicals, Inc. (polyester polyol, solid content: 60 mass percent, OH value: 2.2 × 10⁻⁴ mol/g, acid value: 3.0 × 10^{-5 (}mol/g)), and Takenate A52 manufactured by Mitsui Chemicals, Inc. (a polyisocyanate containing xylenediisocyanate (XDI) and isophorone diisocyanate (IPDI), solid content: 75 mass percent, NCO value: 2.5 × 10⁻³ mol/g) were blended at a mass ratio (solid content ratio) of 4.80:0.75 to prepare a mixture. Subsequently, an adhesive was prepared by adding Duranate 24A-100 (a polyisocyanate containing hexamethylene diisocyanate (HDI) biuret, solid content: 100 mass percent, NCO value: 5.9 × 10⁻³ mol/g), manufactured by Asahi Kasei Corporation, to the prepared mixture and were mixed. The added amount of 24A-100 was adjusted such that the mass ratio (solid content ratio) of A626:A52:24A-100 became 4.80:0.75:1.00. The content of HDI biuret in the adhesive (based on solids) was 15.3 mass percent, when calculated using a reference based on the total solid content of the adhesive.

Then, using a dry laminator, an adhesive layer and a second base material were laminated onto the aqueous ink layer of the laminate obtained in Step (A). Specifically, first, in the coating section of a dry laminator, the adhesive obtained above (solid content: 30 mass percent) was applied to the surface of the aqueous ink layer and dried at 80 °C for 1 minute to form an adhesive layer with a thickness of 3.1 µm (dry laminate adhesive layer, denoted as "DL" in the table). Then, as a second base material (sealant layer), an unoriented polypropylene film of a thickness 60 µm (manufactured by Toray Industries, Inc., trade name: CPP film ZK207, denoted as "CPP" in the table) was prepared, and in the lamination section of the dry laminator, this second base material was laminated onto the adhesive layer formed as described above. After the lamination, the packaging material according to the example 1-1 was obtained by curing at 50 °C for 72 hours.

### [Manufacture of packaging member]

Two sheets measuring 140 mm in width and 100 mm in length were cut from the obtained packaging material. The sheets were placed face-to-face with the second base material sides which face each other so that their four edges overlapped, and a packaging bag with one open side was produced by heat-sealing three of the four edges. After pouring 50 g of water into the packaging bag, the open side of the packaging bag was heat-sealed to produce a packaging member (i.e., pouch). The produced packaging member was then subjected to retort processing at 121 °C for 30 minutes. This resulted in a retort-processed packaging member.

### <Example 1-2 and Comparative Example 1-1>

Packaging materials for an example 1-2 and comparative example 1-1 were prepared in the same manner as that explained in the example 1-1, except that the thicknesses of the adhesive layer and the ink layer were adjusted to the values shown in Table 1. Furthermore, with the exception of using the packaging materials from the examples 1-2 and comparative example 1-1 as the packaging materials, respectively, the packaging members for the examples 1-2 and comparative example 1-1 were prepared in the same manner as that shown in the example 1-1.

### <Example 1-3>

In this example 1-3, except that, instead of Duranate 24A-100, Duranate P301-75E manufactured by Asahi Kasei Corporation (a polyisocyanate containing an HDI adduct [trimethylolpropane adduct of HDI], solid content: 75 mass percent, NCO value: 3.0 × 10⁻³ mol/g) was used, and the thicknesses of the adhesive layer and ink layer were adjusted to the values shown in Table 1, the procedure was the same as that explained in the example 1-1, so that a packaging material according to the example 1-3 was produced. The content of the HDI adduct contained in the adhesive (based on solids) was 15.3 mass percent, when compared with a reference which was based on the total solid content of the adhesive. In addition, except for using the packaging material produced in the example 1-3 as the packaging material, the packaging member according to the example 1-3 was prepared in the same manner as in the example 1-1.

### <Example 1-4>

In this example 1-4, except that, instead of Duranate 24A-100, Duranate TPA-100 manufactured by Asahi Kasei Corporation (a polyisocyanate containing HDI isocyanurate, solid content: 100 mass percent, NCO value: 5.9 × 10-3 mol/g) was used and the thicknesses of the adhesive layer and ink layer were adjusted to the values shown in Table 1, a packaging material according to the example 1-4 was produced in the same manner as that explained in the example 1-1. The content of the HDI isocyanurate component contained in the adhesive (based on solid content) was 15.3 mass percent, when compared with a reference which was based on the total solid content of the adhesive. In addition, except for using the packaging material from the example 1-4 as the packaging material, a packaging member according to the example 1-4 was produced in the same manner as that explained in the example 1-1.

### <Examples 1-5 to 1-6>

The packaging materials for examples 1-5 to 1-6 were produced in the same manner as that explained in the example 1-1, except that white aqueous flexographic ink (Aquariona TPN3 White manufactured by Toyo Ink Co., Ltd.) was used as the aqueous ink in place of the red aqueous flexographic ink, and the thicknesses of the adhesive layer and the ink layer were adjusted to the values shown in Table 1. In addition, except for using, as the packaging material, the packaging materials prepared in the examples 1-5 to 1-6, packaging members according to the examples 1-5 to 1-6 were produced in the same manner as that explained in the example 1-1.

### <Example 2-1>

In this example 2-1, except that, instead of biaxially oriented polyethylene terephthalate film, a barrier film having a thickness of 12-µm (manufactured by Toppan Printing Co., Ltd., product name: GL-ARH, denoted as "GL-ARH" in the table) was used as the first base material, and the thicknesses of the adhesive layer and ink layer were adjusted to the values shown in Table 1, a packaging material according to the example 2-1 was produced in the same manner as that explained in the example 1-1. In addition, except for using the packaging material produced in the example 2-1 as the packaging material, a packaging member according to the example 2-1 was produced in the same manner as that explained in the example 1-1.

### <Example 3-1>

In this example 3-1, except that, as the first base material, a biaxially oriented nylon film having a thickness of 15 µm (manufactured by Unitika Ltd., product name: Emblem ONM (Type: RT); "Emblem" is a registered trademark; denoted as "ONY" in the table) was used instead of the biaxially oriented polyethylene terephthalate film; as the aqueous ink, white aqueous flexographic ink (Aquariona TPN3 White manufactured by Toyo Ink Co., Ltd.) was used instead of the red aqueous flexographic ink; and the thicknesses of the adhesive layer and the ink layer were adjusted to the values shown in Table 1, a packaging material according to the example 3-1 was produced in the same manner as that explained in the examples 1-3. In addition, with the exception of using the packaging material produced in the example 3-1 as the packaging material, a packaging member according to the example 3-1 was produced in the same manner as that explained in the example 1-1.

### <Example 3-2>

In this example 3-2, except that, instead of Duranate P301-75E, Takenate D-140N manufactured by Mitsui Chemicals, Inc. (a polyisocyanate containing an IPDI adduct (trimethylolpropane adduct of IPDI), solid content: 75 mass percent, NCO value: 2.5 × 10⁻³ mol/g) was used, and the thicknesses of the adhesive layer and the ink layer were adjusted to the values shown in Table 1, a packaging material according to the example 3-2 was produced in the same manner as that explained Example 3-1. In addition, with the exception of using the packaging material produced in this example 3-2 as the packaging material, a packaging member according to the example 3-2 was produced in the same manner as that explained in the example 1-1.

### <Example 3-3>

In this example 3-3, except that, instead of Duranate P301-75E, Takenate D-110N manufactured by Mitsui Chemicals, Inc. (a polyisocyanate containing an XDI adduct (trimethylolpropane adduct of XDI), solid content: 75 mass percent, NCO value: 2.7 × 10⁻³ mol/g) was used, and the thicknesses of the adhesive layer and the ink layer were adjusted to the values shown in Table 1, a packaging material according to this example 3-3 was produced in the same manner as that explained in the example 3-1. In addition, with the exception of using the packaging material produced in this example 3-3 as the packaging material, a packaging member according to the example 3-3 was produced in the same manner as that explained in the example 1-1.

### <Comparative examples 1-2 to 1-3>

Except for not using Duranate 24A-100 and adjusting the thicknesses of the adhesive layer and ink layer to the values shown in Table 1, packaging materials for the comparative examples 1-2 to 1-3 were produced in the same manner as that in the example 1-1. In addition, with the exception of using the packaging materials produced in the comparative examples 1-2 to 1-3 as the packaging materials, packaging members according to the comparative examples 1-2 to 1-3 were produced in the same manner as that explained in the example 1-1.

### <Comparative examples 1-4 to 1-6>

Except for not using Duranate 24A-100 and adjusting the thickness of the adhesive layer and the ink layer to the values shown in Table 1, packaging materials for the comparative examples 1-4 to 1-6 were produced in the same manner as that explained in the example 1-5. Furthermore, except for using the packaging materials produced in the comparative examples 1-4 to 1-6 as the packaging materials, packaging members of the comparative examples 1-4 to 1-6 were produced in the same manner as that explained in the example 1-1.

### <Comparative example 2-1>

A packaging material for the comparative example 2-1 was produced in the same manner as that explained in the example 2-1, except that Duranate 24A-100 was not used, but the thicknesses of the adhesive layer and the ink layer were adjusted to the values shown in Table 1. In addition, a packaging member in the comparative example 2-1 was produced in the same manner as that explained in the example 1-1, except that the packaging material produced by this comparative example 2-1 was adopted.

### <Comparative example 3-1>

A packaging material for the comparative example 3-1 was produced in the same manner as that explained in the example 3-1, except that Duranate P301-75E was not used, but the thicknesses of the adhesive layer and the ink layer were adjusted to the values shown in Table 1. Furthermore, a packaging member for the comparative example 3-1 was produced in the same manner as that explained in the example 1-1, except that the packaging material produced by this comparative example 3-1 was employed.

### <Example 4-1>

### (Preparation of Solvent-Free Adhesive)

As a polyol base, TSN4864A (manufactured by Toyo-Morton, Inc., polyester polyol, OH value: 1.8×10⁻³ mol/g, acid value: 3.8 × 10⁻³ mol/g) was prepared. HDI biuret (manufactured by BASF Co., Basonat^{®} HB-100, NCO value: 5.3 × 10⁻³ mol/g) and HDI nurate (Takenate D177N manufactured by Mitsui Chemicals, Inc., NCO value: 4.8 × 10⁻³ mol/g) were mixed with this polyol base. The mixing ratio of the polyol base, the HDI biuret, and the HDI nurate was set at 60:20:80 by mass (solid content). By this mixing, solvent-free adhesive 1 was prepared. The HDI content (total amount of HDI biuret and HDI nurate (based on solids)) in the adhesive was 62.5 mass percent, when measured with a reference based on the total solid content of the adhesive.

### (Manufacture of packaging material)

### [Step (A)]

As the first base material, a biaxially oriented polypropylene film of a thickness 20 µm (manufactured by Mitsui Chemicals Tohcello, Inc., product name: U-1) (denoted as "OPP1" in the table) was prepared as the first base material, and then white aqueous flexographic ink (Aquariona^{®} TPN3 White, manufactured by Toyo Ink Co., Ltd.) was flexographically printed onto the surface of this first base material to form an aqueous ink layer having a thickness of 2.8 µm (denoted as "ink" in the table). This produced a laminate (A) consisting of a first base material and an aqueous ink layer.

### [Steps (B) and (C)]

Using a non-solvent laminator (SuperSimplex SL, manufactured by Nordmeccanica Co.), the foregoing solvent-free adhesive 1 was applied to the aqueous ink layer of the foregoing laminate (A) at a coating roll temperature of 70 °C, a coating speed of 200 m/min, and a coating weight of 1.6 g/m², thereby resulted in that an adhesive layer with a thickness of 1.4 µm (non-solvent adhesive layer, denoted as "NS1" in the table) was formed. Then, a biaxially oriented polypropylene film with a thickness of 20 µm (manufactured by Mitsui Chemicals Tohcello, Inc., product name: U-1; denoted as "OPP2" in the table) was prepared as the second base material, and this second base material was laminated onto the adhesive layer formed as described above, using the lamination section of a solvent-free laminator. After the lamination, the laminate (B) was obtained by curing the laminate at 40 °C for 72 hours.

### [Steps (B') and (C')]

The foregoing solvent-free adhesive 1 was applied to the second base material of the foregoing laminate (B) under the same conditions as those employed in the foregoing process (B), thus forming an adhesive layer with a thickness of 2 µm (non-solvent adhesive layer, denoted as "NS2" in the table). Next, as the third base material, a non-oriented polypropylene film with a thickness of 60 µm (manufactured by Toray Industries, Inc., product name: CPP film ZK207, denoted as "CPP" in the table) was prepared, and this third base material was laminated onto the adhesive layer formed as described above, using the lamination section of a non-solvent laminator. After the lamination, the packaging material in the example 4-1 was obtained by curing the laminate at 40 °C for 72 hours.

### <Example 4-2>

### (Preparation of Solvent-free adhesive)

Except that, in addition to HDI biuret and HDI nurate, IPDI (VESTANAT T 1890/100 manufactured by Evonik Industries AG, NCO value: 4.1 × 10⁻³ mol/g) was used as the isocyanate to be mixed with the polyol base, and the mixing ratio of the polyol base, HDI biuret, HDI nurate, and IPDI was set to 100:35:15:50 by mass (solid content ratio), a solvent-free adhesive 2 was prepared in the same manner as that explained in the example 4-1.

### (Manufacture of packaging material)

A packaging material in this example 4-2 was manufactured in the same manner as that adopted by the example 4-1, except that the solvent-free adhesive 2 was used in place of the solvent-free adhesive 1, the adhesive application amount in the process (B) was changed to 1.8 g/m², and the thickness of the adhesive layer (non-solvent adhesive layer, denoted as "NS1" in the table) was set to 1.5 µm.

### <Comparative Example 4-1>

The packaging material for a comparative Example 4-1 was manufactured in the same manner as that explained in the example 4-2, except that in the step (A), the thickness of the aqueous ink layer was changed to 9.0 µm, and in the step (B), the thickness of the adhesive layer (non-solvent adhesive layer, denoted as "NS1" in the table) was set to 0.5 µm.

**[Table 1]**

| | Laminated Structure | ink | DL | Layer Thickness | | |
|---|---|---|---|---|---|---|
| | | | Polyisocyanate | ink | DL | Ink/DL |
| | | | | [µm] | [µm] | |
| Example 1-1 | PET/ink/DL/CPP | TPN3 Magenta | HDI Biuret | 0.65 | 3.10 | 0.20 |
| Example 1-2 | PET/ink/DL/CPP | TPN3 Magenta | HDI Biuret | 2.35 | 2.70 | 0.87 |
| Example 1-3 | PET/ink/DL/CPP | TPN3 Magenta | HDI Adduct | 0.80 | 2.90 | 0.30 |
| Example 1-4 | PET/ink/DL/CPP | TPN3 Magenta | HDI Nurate | 0.70 | 2.60 | 0.30 |
| Example 1-5 | PET/ink/DL/CPP | TPN3 White | HDI Biuret | 0.80 | 3.00 | 0.30 |
| Example 1-6 | PET/ink/DL/CPP | TPN3 White | HDI Biuret | 5.00 | 5.26 | 0.95 |
| Example 2-1 | GL-ARH/ink/ DL/CPP | TPN3 Magenta | HDI Biuret | 0.50 | 2.90 | 0.20 |
| Example 3-1 | ONY/ink/DL/CPP | TPN3 White | HDI Adduct | 0.70 | 3.00 | 0.23 |
| Example 3-2 | ONY/ink/DL/CPP | TPN3 White | HDI Adduct | 0.70 | 3.00 | 0.23 |
| Example 3-3 | ONY/ink/DL/CPP | TPN3 White | HDI Adduct | 0.70 | 3.00 | 0.23 |
| Comparative Example 1-1 | PET/ink/DL/CPP | TPN3 Magenta | HDI Biuret | 4.30 | 3.10 | 1.39 |
| Comparative Example 1-2 | PET/ink/DL/CPP | TPN3 Magenta | | 0.60 | 3.10 | 0.20 |
| Comparative Example 1-3 | PET/ink/DL/CPP | TPN3 Magenta | | 2.50 | 3.00 | 0.80 |
| Comparative Example 1-4 | PET/ink/DL/CPP | TPN3 White | | 0.80 | 3.00 | 0.30 |
| Comparative Example 1-5 | PET/ink/DL/CPP | TPN3 White | | 4.20 | 3.00 | 1.40 |
| Comparative Example 1-6 | PET/ink/DL/CPP | TPN3 White | | 5.00 | 5.30 | 0.94 |
| Comparative Example 2-1 | GL-ARH/ink/ DL/CPP | TPN3 Magenta | | 0.60 | 3.10 | 0.20 |
| Comparative Example 3-1 | ONY/ink/DL/CPP | TPN3 White | | 0.70 | 3.00 | 0.23 |

**[Table 2]**

| | Laminated Structure | ink | Adhesion | | Layer Thickness | | |
|---|---|---|---|---|---|---|---|
| | | | Polyisocyanate A | Polyisocyanate A content (%) | ink | NS1 | ink/NS1 |
| | | | | | [µm] | [µm] | |
| Example 4-1 | OPP1/ink/ NS1/OPP2/ NS2/CPP | TPN3 White | HDI Biuret:HDI Nurate =2:8 | 62.5 | 2.8 | 1.4 | 2.1 |
| Example 4-2 | OPP1/ink/ NS1/OPP2/ NS2/CPP | TPN3 White | HDI Biuret:HDI Nurate =7:3 | 25 | 2.8 | 1.5 | 1.9 |
| Comparative Example 4-1 | OPP1/ink/ NS1/OPP2/ NS2/CPP | TPN3 White | HDI Biuret:HDI Nurate =7:3 | 25 | 9.0 | 0.5 | 18.0 |

### <SPM Observation>

### [Packaging Material]

SPM phase images showing the cross sections of the adhesive layers of the packaging materials used in the examples and comparative examples were acquired. Specifically, first, the front and back surfaces of the packaging material were corona-treated, and then each of the packaging materials was cut into 2 × 3 mm strips. Then, the obtained strip-shaped packaging materials were embedded in a light-curable resin (product name, Aronix LCRD-800, a visible-light-curable resin manufactured by Toagosei Co., Ltd.), and the resin was cured by irradiation with light, thereby obtaining a block specimen consisting of the packaging material and the cured resin in which the packaging material was embedded. Then, the block specimen was secured in an SPM specimen holder insert (an insert for AFM specimen holders manufactured by Leica Microsystems GmbH). At room temperature (25°C), the block specimen was trimmed and a cross-section of the packaging material (a cross-section perpendicular to the layer interface) was cut using a glass knife. Subsequently, the cross-section was cut with a diamond knife until the cross-section became mirror-like. An Ultra-Microtome EM UC7 manufactured by Leica Microsystems GmbH was used as the cross-section cutting device, with a cutting speed of 3 mm/s and a cutting thickness set to 500nm. The cutting direction was parallel to the layer interface. While the block specimen prepared as described above remained secured in the SPM specimen holder insert, phase image measurements were then performed on the block specimen using an SPM (scanning probe microscope). Specifically, under ambient conditions of 25 °C, shape measurements were performed using the SPM's AC mode (tapping mode) with a field of view of 6 µm × 6 µm and a scanning speed of 2 Hz, such that the layer interface of the cross section was parallel to the scanning direction of the Fast Scan, resulting in that phase images, height images, and amplitude images were acquired. As the SPM, the Jupiter XR (product name) manufactured by Oxford Instruments PLC was used. As the cantilever (measuring probe) for the SPM, the AC160TS (product name) manufactured by OLYMPUS COOPERATION was used, of which representative characteristics are a tip radius of curvature of 7 nm and a spring constant of 26 N/m. In the measurement, the measurement resolution was set to 256 × 256, and the step point, drive amplitude, and integral gain were adjusted so that the island parts could be clearly observed in the phase images. Specifically, in the phase images, the phase during the measurement was set to be smaller than the phase prior to contact (Engage) between the specimen and the cantilever; in the height image, the trace and retrace signals were made to coincide to each other; and in the amplitude image, the trace and retrace signals were made to be inverted relative to each other.

Such measurements were performed on three independent regions within the cross section. The resulting phase images were digitized using the Jupiter-XR analysis software, and then subjected to image analysis.

The image analysis was performed using ImageJ (developed by the U.S. National Institutes of Health). Specifically, first, the image with phase values represented as grayscale brightness levels was displayed and selected the entire adhesive layer using a polygon. Then a binary image of the adhesive layer brightness was obtained using the Auto Local Threshold function. Island-like regions were then extracted using the "ANALYZE PARTICLES" function. To distinguish these regions from noise, the minimum area was set to 5 pixels or more (0.0027 µm² or more). For each of the extracted island-like regions, the minimum Feret's diameter was calculated, and regions with a minimum Feret's diameter of 0.1 µm or greater was identified as "island parts." The number of island parts at the three measured locations was summed, and it was determined that those with at least two island parts possessed a microphase separation structure, in which the area other than the island parts were classified as a sea part. In this manner, it was determined whether the SPM phase images of the adhesive-layer cross section exhibited the microphase separation structure having a sea part and a plurality of island parts scattered in the sea part. It is noted that the island part may be an area with lower brightness than its surroundings, or the island part may be an area with higher brightness than its surroundings. However, when using ANALYZE PARTICLES to extract regions with low brightness and regions with high brightness, the set with the greater number of extracted regions shall be considered the island; if the number of regions is the same, the set with the smaller total area shall be considered the island. Meanwhile, the island part may contain one or more regions with different brightness levels. In such cases, the island is considered a single entity, including the regions with different brightness levels. As an alternative, the island part may touch at least one of the top, bottom, left, or right edges of the selected image analysis area.

Then, for each of the extracted island-like regions, the minimum Feret's diameter was calculated, and regions with a minimum Feret's diameter of 0.1 µm or greater were classified as "island parts." Then, calculated were the maximum Feret's diameters of the island parts, the number of island parts (n1, n2, total), and the ratio n1/n2 between the number of island regions, n1, located closer to the aqueous ink layer than to the center in the adhesive- layer thickness direction and the number of island regions, n2, located closer to the second base material than to the center in the adhesive-layer thickness direction. Furthermore, within the adhesive layer divided by a straight line, island parts were extracted using "ANALYZE PARTICLES" function on both the side of the adhesive layer adjacent to the aqueous ink layer and the side of the adhesive layer opposed to the aqueous ink layer. In this case, for island parts that overlapped with the straight line drawn for the segmentation, if the regions of the island parts on the base material side facing the aqueous ink layer accounted for 50 percent or more of such a total region, such a region was counted as the regions on the base material side facing the aqueous ink layer.

The maximum Feret's diameter of each island part was determined by measuring the maximum Feret's diameter in each island part. The maximum value of the maximum Feret's diameters of the island parts in three arbitrary locations (within a field of view of 6 µm × 6 µm) was calculated. The number of island parts, n1, was determined by measuring the number of islands per 1 µm² of the adhesive layer in three arbitrary locations (within a field of view of 6 µm × 6 µm) on the aqueous ink layer side, relative to the center in the direction of the adhesive layer thickness, and then calculating the average of these values. In addition, the number of island parts, n2, was determined by measuring the number of island parts per 1 µm² of the adhesive layer in three arbitrary locations (within a field of view of 6 µm × 6 µm) on the side of the second base material relative to the center of the adhesive layer's thickness direction, and then calculating the average of these values. The total number of island parts was obtained by calculating the average of the number of island parts, n1, and the number of island parts, n2.

The measurement results showed that, in the packaging material of the embodiment, the foregoing "island parts" were observed in the SPM phase image of an adhesive-layer cross section (i.e., a microphase separation structure having a sea part and a plurality of island parts scattered within the sea part was observed). In contrast, in the packaging materials provided as comparative examples, the foregoing "island parts" were not observed in the SPM phase image of the adhesive-layer cross section. The measurement results for the examples are shown in Table 3.

### [Packaging member]

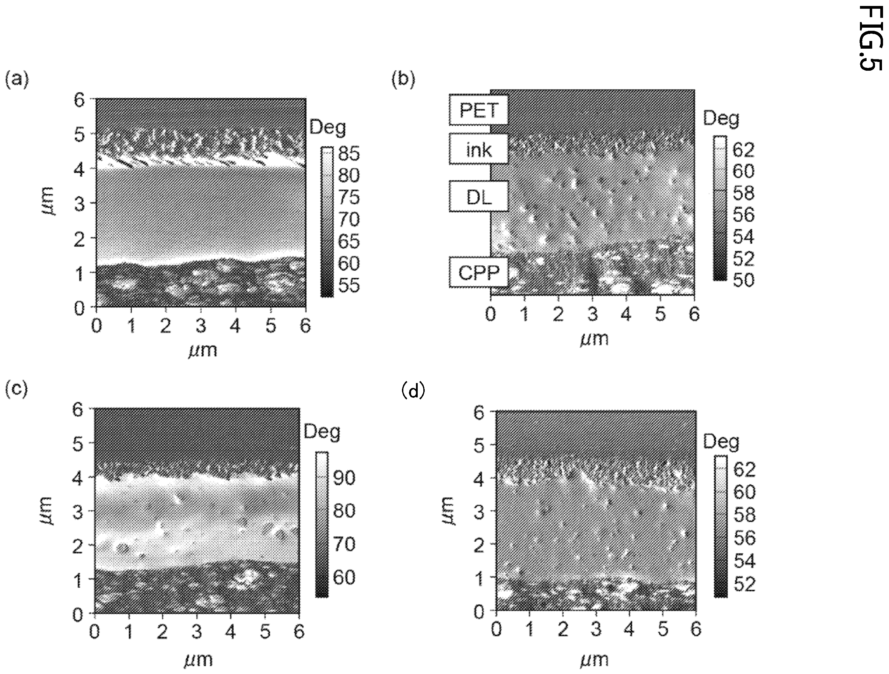

SPM phase images of the adhesive-layer cross section in the packaging members of each example and comparative example were acquired. Specifically, the packaging members of the respective examples and comparative examples were first stored at 25 °C and 50% RH for six months. The packaging members were disassembled, and the sheets (laminates) constituting the packaging bag were cut out. Next, following the same procedure used to acquire and analyze the SPM phase image of the adhesive-layer cross section in the packaging material described above, SPM phase images of the adhesive-layer cross sections of the resulting sheets were acquired for image analysis. In the packaging members of the embodiments, the foregoing "island parts" were observed (i.e., the microphase separation structure having a sea part and a plurality of island parts scattered within the sea part was observed). In contrast, the foregoing "island part" was not observed in the packaging member of the comparative example. The results of the examples are shown in Table 4. For reference, Fig. 5 shows the phase images obtained for the comparative example 1-2, example 1-1, example 1-3, and example 1-4. Pictures (a), (b), (c), and (d) shown in Fig. 5 correspond to the comparative example 1-2, example 1-1, example 1-3, and example 1-4, respectively.

**[Table 3]**

| | SPM Phase Image (Packaging Material) | | | | |
|---|---|---|---|---|---|
| | Maximum Island Part Diameter (µm) | Number of Island Parts | | | |
| | | n1 (per µm²) | n2 (per µm²) | Total (per µm²) | n1/n2 |
| Example 1-1 | 0.22 | 6.1 | 7.2 | 6.6 | 0.85 |
| Example 1-2 | 0.13 | 1.5 | 1.7 | 1.6 | 0.88 |
| Example 1-3 | 0.32 | 4.3 | 7.4 | 5.8 | 0.58 |
| Example 1-4 | 0.17 | 4.0 | 5.1 | 4.6 | 0.78 |
| Example 1-5 | 0.21 | 4.0 | 5.1 | 4.5 | 0.78 |
| Example 1-6 | 0.28 | 1.2 | 1.6 | 1.4 | 0.75 |
| Example 2-1 | 0.23 | 3.1 | 3.6 | 3.3 | 0.86 |
| Example 3-1 | 0.33 | 3.7 | 4.1 | 3.9 | 0.90 |
| Example 3-2 | 0.28 | 3.7 | 4.1 | 3.9 | 0.90 |
| Example 3-3 | 0.25 | 3.7 | 4.2 | 3.9 | 0.88 |
| Example 4-1 | 0.33 | 0.6 | 1.0 | 0.8 | 0.63 |
| Example 4-2 | 0.12 | 0.8 | 3.1 | 2.0 | 0.26 |

**[Table 4]**

| | SPM Phase Image (packaging member after retort processing) | | | | |
|---|---|---|---|---|---|
| | Maximum Island Part Diameter (µm) | Number of Island Parts | | | |
| | | n1 (per µm²) | n2 (per µm²) | Total (per µm²) | n1/n2 |
| Example 1-1 | 0.17 | 2.5 | 5.0 | 3.8 | 0.50 |
| Example 1-2 | 0.11 | 1.0 | 1.8 | 1.4 | 0.56 |
| Example 1-3 | 0.38 | 2.0 | 3.4 | 2.7 | 0.59 |
| Example 1-4 | 0.18 | 2.0 | 3.5 | 2.7 | 0.57 |
| Example 1-5 | 0.18 | 2.7 | 5.3 | 4.0 | 0.51 |
| Example 1-6 | 0.20 | 0.8 | 1.7 | 1.3 | 0.47 |
| Example 2-1 | 0.20 | 3.1 | 3.8 | 3.4 | 0.82 |
| Example 3-1 | 0.36 | 2.5 | 4.4 | 3.4 | 0.57 |
| Example 3-2 | 0.30 | 2.5 | 4.4 | 3.4 | 0.57 |
| Example 3-3 | 0.18 | 2.5 | 4.4 | 3.5 | 0.57 |
| Example 4-1 | 0.29 | 0.2 | 0.6 | 0.8 | 0.42 |
| Example 4-2 | 0.11 | 0.3 | 1.9 | 1.1 | 0.17 |

### <Evaluation (A): Peeling and blistering evaluation>

The packaging members from each example and comparative example were visually inspected after retorting processing. The evaluation was conducted using the following marking system: a mark "Poor" was assigned when large linear peeling, including the seal edge, was observed; a mark "Fair" was assigned when no peeling involving the seal edge was observed, but small punctate blistering was present; and a mark "Good" was assigned when neither large linear peeling nor small punctate blistering was observed. The results are shown in Table 5.

### <Evaluation (B): Laminate strength>

The laminate strength of the packaging materials for each example and comparative example was evaluated before and after retort processing using the following method.

### [Before retort processing]

Test specimens measuring 15 mm in width and 200 mm in length were cut from the packaging materials used in each example and comparative example. For those test specimens, a T-peel test was conducted under conditions of 20 °C and 30% RH in accordance with JIS K 6854, using a peel rate of 300 mm/min and a 15 mm width, to measure the adhesion strength between the first base material and the second base material. In this evaluation, the laminate strength was judged to be insufficient (Rating: Poor) when the adhesion strength was less than 1.0 N/15 mm; it was judged to be sufficiently high (Rating: Fair) when the adhesion strength was 1.0 N/15 mm or higher; and it was judged to be higher adhesion strength (Rating: Good) because of no peeling (i.e., strength measurement was not possible). The results are shown in Table 5.

### [After retort processing]

The lamination strength (adhesion strength) between the first base material and the second base material in the packaging materials of each example and comparative example was measured immediately after retort processing using the procedures described in (1) through (5) below. The evaluation criteria were the same as those used for evaluating the lamination strength in "before retort processing." The results are shown in Table 5.
(1) Two sheets, each measuring 140 mm in width and 100 mm in length, were cut from the packaging material. The sheets were placed face-to-face with the second base material sides facing each other such that their four edges overlapped, and three of the four edges were heat-sealed to produce a packaging bag with one open side.
(2): A rest pouch was prepared by pouring water of 50 g into the packaging bag and then heat-sealing one open side of the bag.
(3): The test pouch prepared in the step (2) were subjected to retort processing at 121 °C for 30 minutes.
(4): After the retort processing described in the step (3), a test specimen measuring 15 mm in width and 200 mm in length was cut from one of the two sheets composing the test pouch.
(5) A T-peel test was conducted on the test specimen under conditions of 20 °C and 30% RH, in accordance with JIS K 6854, at a peel rate of 300 mm/min and a width of 15 mm, to measure the adhesion strength between the first base material and the second base material.

The heat sealing in the steps (1) and (2) was performed using a sealing bar with a width of 15 mm by applying heat and pressure to each of the foregoing edges at 150 °C and 3 kg/cm² for 0.5 seconds.

### <Rating (C): Printed state>

The condition of the ink layer on the packaging material in each example and comparative example was evaluated based on the following criteria:
Good: Higher color reproduction
Poor: Poor color reproduction

**[Table 5]**

| | Rating (A) | Rating (B) | | | Rating (C) |
|---|---|---|---|---|---|
| | Appearance Rating | Lamination Strength (N/15mm) | | Evaluation | Printed State |
| | | Before Retorting | Immediately After Retorting | | |
| Example 1-1 | Good | No peeling | No peeling | Good | Good |
| Example 1-2 | Good | No peeling | No peeling | Good | Good |
| Example 1-3 | Good | No peeling | 1.5 | Fair | Good |
| Example 1-4 | Good | No peeling | No peeling | Good | Good |
| Example 1-5 | Good | No peeling | No peeling | Good | Good |
| Example 1-6 | Good | No peeling | No peeling | Good | Good |
| Example 2-1 | Good | No peeling | No peeling | Good | Good |
| Example 3-1 | Good | 5.8 | 5.3 | Fair | Good |
| Example 3-2 | Good | No peeling | 2.5 | Fair | Good |
| Example 3-3 | Good | 8 | 7.2 | Fair | Good |
| Comparative Example 1-1 | Fair | No peeling | No peeling | Good | Good |
| Comparative Example 1-2 | Fair | No peeling | No peeling | Good | Good |
| Comparative Example 1-3 | Fair | 2 | No peeling | Fair | Good |
| Comparative Example 1-4 | Fair | No peeling | 1.6 | Fair | Good |
| Comparative Example 1-5 | Poor | 2.5 | 0.6 | Poor | Good |
| Comparative Example 1-6 | Fair | No peeling | No peeling | Good | Good |
| Comparative Example 2-1 | Fair | No peeling | 3.5 | Fair | Good |
| Comparative Example 3-1 | Fair | 5.3 | 5.2 | Fair | Good |
| Example 4-1 | Good | No peeling | No peeling | Good | Good |
| Example 4-2 | Good | No peeling | No peeling | Good | Good |
| Comparative Example 4-1 | Fair | No peeling | 1.5 | Fair | Good |

1...First base material
2...Aqueous ink layer
2a...Pigment
3...Adhesive layer
3a...Sea part
3b...Island part
4...Second base material
10, 20...Packaging material
30...Packaging bag

## Claims

1. A packaging material provided with a first base material, an aqueous ink layer, an adhesive layer, and a second base material in this order, wherein
a phase image, which is obtained by observing a cross section of the adhesive layer in a thickness direction thereof by a scanning probe microscope in a tapping mode thereof, has a microphase separation structure provided with a sea part and a plurality of island parts scattered in the sea part.

2. The packaging material according to claim 1, wherein the adhesive layer is made of a urethane-based adhesive containing polyisocyanate and polyol.

3. The packaging material according to claim 1, wherein the microphase separation structure has the island parts of which a maximum Feret's diameter is 0.1 to 1.0 µm.

4. The packaging material according to claim 1, wherein the island parts are, in number, 0.1 to 100 per µm^{2.}

5. The packaging material according to claim 1, wherein a ratio of n1/n2 is below 1, wherein n1 is designated as the number of islands which are located relatively closer to the aqueous ink layer than a center of the adhesive layer in the thickness direction is and n2 is designated as the number of islands which are located relatively closer to the second base material than the center of the adhesive layer in the thickness direction is.

6. The packaging material according to claim 1, wherein the aqueous ink layer is made of aqueous flexographic ink.

7. The packaging material according to claim 1, wherein the adhesive layer is made of adhesive for dry lamination.

8. The packaging material according to claim 1, wherein the first base material contains at least one selected from a group consisting of an oriented polyethylene terephthalate film, an oriented polypropylene film, an oriented nylon film, and an oriented polyethylene film.

9. The packaging material according to claim 1, wherein the first base material contains a vapor barrier layer.

10. The packaging material according to claim 1, wherein
an adhesion strength provided between the first base material and the second base material, which is measured by steps (1) through (5) provided below, is 1.0 N/15mm or more:
(1) cut two sheets measuring 140 mm in width and 100 mm in length from the packaging material, place the two sheets with their second base material sides facing each other so that their four edges overlap, and heat-seal three of the four edges to form a packaging bag with one open side;
(2) produce a test pouch by adding water of 50 g to the packaging bag and then heat-sealing one open side of the bag;
(3) apply retort processing to the test pouch produced in the step (2) at 121 °C for 30 minutes;
(4) after the retort processing performed in the step (3), cut out a test specimen measuring 15 mm in width and 200 mm in length from one of the two sheets that make up the test pouch; and
(5) conduct a T-peel test on the test specimen under conditions of 20 °C and 30 %RH, in accordance with JIS K 6854, at a peel rate of 300 mm/min and a width of 15 mm, and then measure the adhesion strength between the first base material and the second base material.

11. A packaging bag provided by bag-forming the packaging material according to any one of claims 1 to 10.

12. A packaging member provided with the packaging bag according to claim 11 and contents contained in the packaging bag.
